(19) Europäisches Patentamt / European Patent Office / Office européen des brevets

(11) **EP 1 701 775 B2**

(12) **NEW EUROPEAN PATENT SPECIFICATION**
After opposition procedure

(45) Date of publication and mention of the opposition decision:
**13.06.2012 Bulletin 2012/24**

(45) Mention of the grant of the patent:
**10.09.2008 Bulletin 2008/37**

(21) Application number: **04797466.2**

(22) Date of filing: **19.11.2004**

(51) Int Cl.:
**B01D 11/02** *(2006.01)*

(86) International application number:
**PCT/DK2004/000805**

(87) International publication number:
**WO 2005/049170 (02.06.2005 Gazette 2005/22)**

(54) **A METHOD AND PROCESS FOR CONTROLLING THE TEMPERATURE, PRESSURE AND DENSITY PROFILES IN DENSE FLUID PROCESSES AND ASSOCIATED APPARATUS**

VERFAHREN UND PROZESS ZUR STEUERUNG DER TEMPERATUR-, DRUCK- UND DICHTEPROFILE IN PROZESSEN MIT DICHTEN FLUIDEN UND VORRICHTUNG DAFÜR

METHODE ET PROCESSUS DE CONTROLE DES PROFILS DE TEMPERATURE, PRESSION ET DENSITE DANS DES TRAITEMENTS DE FLUIDE DENSE ET DISPOSITIF ASSOCIE

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **19.11.2003 DK 200301718**

(43) Date of publication of application:
**20.09.2006 Bulletin 2006/38**

(60) Divisional application:
**08164000.5 / 2 014 344**

(73) Proprietors:
• **NATEX Prozesstechnologie GesmbH**
  **2630 Ternitz (AT)**
• **DIAM Bouchage SAS**
  **66400 Ceret (FR)**

(72) Inventors:
• **IVERSEN, Steen, Brummerstedt**
  **DK-2950 Vedbaek (DK)**
• **FELSVANG, Karsten**
  **DK-3450 Allerod (DK)**
• **LARSEN, Tommy**
  **DK-4200 Slagelse (DK)**
• **LÜTHJE, Viggo**
  **DK-2880 Bagsvaerd (DK)**
• **HENRIKSEN, Ole**
  **DK-9000 Aalborg (DK)**

(74) Representative: **Dossmann, Gérard et al**
  **Bureau D.A. Casalonga & Josse**
  **8 avenue Percier**
  **75008 Paris (FR)**

(56) References cited:
EP-A- 0 828 020        EP-A- 0 828 021
EP-A2- 0 338 831       WO-A2-03/095165
DE-A1- 4 202 320       US-A- 3 213 835
US-A- 4 308 200        US-A- 4 964 995
US-A- 5 998 640        US-B1- 6 623 600
US-B1- 6 805 801

• **L.ACKER: "Handbuch der Lebensmittelchemie, Band V/2.Teil, "Obst, Gemüse, Kartoffeln, Pilze"" 1968, SPRINGER-VERLAG , BERLIN-HEIDELBERG-NEW YORK , XP002315871 Paragraph "f) Sterilisationstechnik" page 412 - page 413**

EP 1 701 775 B2

**Description**

The present invention relates to a method and apparatus for controlling the temperature-, pressure- and density profiles within a vessel operating under high pressure conditions, in particular with a dense fluid under supercritical conditions. More in particular the invention relates to measures and procedures, and an apparatus for controlling the temperature-, pressure- and density profile within pressure vessels for dense fluid treatment processes in order to improve the efficiency of such processes.

BACKGROUND

Fluids under high pressure, and in particular under supercritical conditions have attractive properties for many applications. The diffusivity, viscosity and surface tension are gas-like, while properties such as density and solubility are liquid-like. Furthermore, the solubility is tuneable by simple means such as temperature and pressure.

These attractive properties of such dense fluids at sub- or supercritical conditions have attracted increasing interest, and many applications are under development in research laboratories all over the world. Examples of applications include impregnation (coating), extraction, reactions, synthesis of particles in the micrometer and nanometer range, synthesis of new advanced materials etc.

An example of an extraction process is known from EP 0 828 020 A2, wherein agitation of articles is performed due to a density difference between gas and liquid in the subcritical phase.

The solubility in a dense fluid is a function of the fluid density, and the operating window for most applications is typically selected from solubility considerations. The density of a dense fluid is a unique function of the temperature and pressure. Further, many applications involve processing of thermosensitive compounds or materials, where temperature or pressure gradients affects the mechanical integrity of the end product or lead to unacceptable large variations in the quality. This is particularly true for applications involving high pressure treatment of a porous media e.g. an impregnation (coating) or an extraction process.

Such applications generally involve a pressurisation step, a step at a substantially constant pressure and a depressurisation step. If e.g. the operating pressure is approximately 150 bar, an adiabatic temperature increase of approximately 40 C will occur during pressurisation if the free volume in vessel is 75 % and even more if the free volume is higher. Likewise, a similar temperature decrease occurs during depressurization. If the free volumes not occupied by the material to being treated is present within the vessel, considerable higher temperatures may be present locally. Such uncontrolled temperature increases are undesirable in most applications as the temperature has a significant impact on the fluid density and pressure. For example, in a process utilizing supercritical $CO_2$ operating at 145 bar and 45 °C, a temperature drop of only 6 °C will result in a pressure decrease of 20 bar in order to maintain a constant density. In practise, the temperature drop will be compensated by a change in density and not in pressure. As the solubility properties of a dense fluid is related to the density, temperature effects have a very strong influence on the performance of dense fluid processes and need to be controlled accurately.

Most dense fluid applications are still only performed in laboratory to pilot scale in small diameter vessels in the milliliter to liter scale. In such dense fluid applications, temperature control is generally performed by using a jacketed (double walled) vessel with a thermostated cooling or heating fluid to remove or add heat from the process, and a control of the inlet fluid temperature.

However, when scaling up such processes to large scale industrial vessels, it has been found that the heat transfer area of the vessel is not large enough to ensure sufficient heat transfer through the vessel walls. It has further been found that significant temperature- and density gradients may exist within the vessel, which lead to less efficient processes and may result in unacceptable high variations of the quality of the final product.

DESCRIPTION OF THE INVENTION

An objective of the present invention is to provide a method for improved control of temperature-, pressure- and density profiles within a pressure vessel for dense fluid treatment processes in order to improve the efficiency of such processes. Another objective of the present invention is to provide a method for improving the mixing of the fluid within the vessel. Further objectives include providing method(s) for reducing energy consumption, and equipment size of such processes.

It is an objective of the present invention to provide an apparatus for use in treating a material by the method mentioned above. Additionally, it is an objective to provide a product obtained by the above mentioned method.

These objectives and the advantages that will be evident from the following description is obtained by the following embodiments of the invention.

The invention provides a method of treating cork contained in a vessel, said method involving as a fluid carbon dioxide present in the vessel as defined in claim 1.

Furthermore, the method according to the invention may further comprise a holding step in which the pressure in the vessel may substantially be constant and/or in which the pressure of the fluid in the vessel may be varied according to a pre-selected schedule during a holding period of predetermined length, the fluid may preferably be at supercritical conditions during the holding period.

Additionally, the method according may further comprise the step of controlling the temperature of the fluid in the recirculation loop according to the present invention.

In another preferred embodiment the heat may be added to and/or extracted from the fluid in the recirculation loop.

Advantageously, the method may control temperature-, pressure- and/or density profiles within the vessel according to invention.

The fluid may furthermore comprise at least one cosolvent according to a preferred embodiment of the present invention.

Advantageously, the cosolvent may according to a preferred embodiment of the invention be selected from the group consisting of alcohol(s), water, ethane, ethylene, propane, butane, sulfurhexafluoride, nitrousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereoff.

Furthermore, the cosolvent may according to a preferred embodiment of the invention be selected from the group consisting of methane, pentane, hexane, heptane, ammonia, benzene, etc. and mixtures thereof.

The fluid may in another preferred embodiment further comprise one or more surfactants, said surfactants being preferably selected from the group consisting of hydrocarbons and fluorocarbons preferably having a hydrophilic/lipophilic balance value of less than 15, where the HLB value is determined according to the following formula: HLB = 7 + sum(hydrophilic group numbers)-sum(lipophilic group numbers).

Advantageously, the fluid after the depressurisation step may be in a gas and/or liquid and/or solid state according to invention.

In yet another preferred embodiments the fluid present in the re-circulation loop may have substantially the same thermodynamical properties as the fluid within the vessel, such that the fluid does not undergo a phase change to a liquid or solid state

Furthermore, the re-circulation according to the invention may be performed during the pressurisation step and/or during the depressurisation step and/or during the holding step, in case a holding step is included.

In a preferred embodiment part of the fluid in the pressure vessel may be withdrawn to the re-circulation loop from/to a pressure below 60 bars, preferably from/to a pressure below 40 bars, and advantageously from/to a pressure below 2 bar.

Furthermore, in preferred embodiment of the present invention the fluid volume withdrawn from the vessel may correspond to the exchange of at least one vessel volume per hour, such as at least two vessel volume exchanges per hour, preferably at least 5 vessel volume exchanges per hour, and advantageously at least 10 vessel volume exchanges per hour, and preferably in the range of 10 to 20 vessel volume exchanges per hour.

Advantageously, the pressure in the vessel after pressurisation step may be in the range 85-500 bar, preferably in the range 85-300 bar such as 100-200 bar according to the invention.

In another preferred embodiment the temperature in the vessel may be maintained in the range 20-300 °C, such as a 30-150 °C, preferable as 35-100 °C, such as 40-60 C

Additionally, the rate of (de)pressurisation is controlled in a predefined manner in specific pressure intervals during the (de)pressurisation period according to the present invention.

In an additional embodiment of the present invention the rate of pressure increase in at least part of the pressure range from 40 to 120 bars may at the most be one half of the maximum rate of pressurisation outside this range, such as one third of the maximum rate of pressurisation, and preferably at the most one fifth of the maximum rate of pressurisation, and more preferably at the most one tenth of maximum rate of pressurisation outside this pressure range.

In anther preferred embodiment the rate of depressurisation rate in at least part of the pressure interval below 110 bars may at the most be one half of the maximum rate of depressurisation outside this range, such as one third of the maximum rate of depressurisation, and preferably at the most one fifth of the maximum rate of depressurisation, and more preferably at the most one tenth of maximum rate of depressurisation outside this pressure range.

When controlling the rate of the (de)pressurisation in the predefined manner the processed material, such as whole cork stoppers is not destroyed or damaged.

Furthermore, the temperature of the fluid being fed into vessel during depressurisation may be increased by up to 10 °C, such as up to 25 °C compared to the inlet temperature during the holding period according to the invention.

Advantageously, the temperature of the fluid being fed to the vessel during depressurisation may be maintained in the range 35-70 C at pressures above 40 bars according to an embodiment of the invention.

In an embodiment of the present invention the pressure of the fluid in the vessel may be reduced during the holding period prior to being fed to means for separation.

In another embodiment of the invention the rate of pressure increase during the pressurisation step may be typically in the range of 0,05-100 bar/min, such 0,1-20 bar/min, and preferably in the range of 0,1-15 bar/min, such as in the range of 0,2-10 bar/min.

Furthermore, the pressure increase during the holding period or pressurisation step may be obtained at least partially by increasing the temperature of the fluid fed to the vessel, said temperature increase being preferably obtained by adding heat to the fluid before being fed to the vessel according to the invention.

In yet another embodiment of the invention the rate of pressure increase during the pressurisation step and/or rate of pressure decrease during the depressurisation step may be controlled at least partially by adding or subtracting heat from the fluid, preferably the fluid being present in the re-circulation loop.

According to an embodiment of the present invention the temperature of the fluid fed to the vessel during all or some of the holding period may vary according to a predefined schedule in order to introduce pressure variations corresponding to the temperature variations in the vessel.

In another embodiment of the invention the temperature of the fluid fed to the vessel during all or some of the holding period may vary according to a predefined schedule, and the pressure may be maintained at a substantially constant level by adding or extracting fluid to/from the vessel in order to introduce density variations corresponding to the temperature variations in the vessel.

Additionally, the uppermost and lowermost levels of the temperature may according to an embodiment of the invention selected so as to provide a density change between the uppermost and lowermost level of up to 75 %, such as 50 % and preferable up to 30 %.

Advantageously, the diameter of the vessel according to the invention may be at least 10 cm, such as at 25 cm, preferably at least 40 cm, more preferably at least 60 cm, even more preferably at least 80 cm, and advantageously above 120 cm.

Furthermore, the pressure vessel according to the present invention may either be horizontally or vertically positioned.

Additionally, the re-circulation loop according to the present invention may comprise at least one heat exchanger for addition or extraction of heat to/from said fluid.

In another embodiment of the invention the recirculation loop may comprise means for withdrawing and recirculating said fluid and wherein said means has/have a head of a magnitude substantially similar to the dynamic pressure loss in the recirculation loop.

In yet another embodiment said means may comprise a centrifugal pump, a centrifugal compressor, a piston pump and/or a piston compressor.

Furthermore, the total head of the means according to the invention may substantially be the same as the dynamic pressure loss in the re-circulation loop, thereby providing a high volumetric throughput rather than a large pressure head.

In an embodiment of the invention the pressure of the fluid present in any part of the external recirculation loop may substantially be constant and in the same order magnitude as the pressure in the vessel at the specific stage in the cycle.

Advantageously, a coating or an impregnation treatment may according to an embodiment of the present invention be performed in the pressure vessel.

The re-circulation loop according to a preferred embodiment of the invention may further comprise a mixer vessel for mixing the fluid with chemicals and being arranged downstream of a heat exchanger.

Furthermore, the mixer vessel containing chemical(s) to may according to an embodiment of the invention be used for coating or impregnation.

Advantageously, an extraction treatment may be or may additionally be performed in the pressure vessel according to the present invention.

In another embodiment of the invention the recirculation loop may comprise means for separating the supercritical fluid from extracted components.

Said means for separating the supercritical fluid from extracted components may furthermore according to the invention comprise one or more cyclone stages.

Furthermore, the pressure of said cyclones may be decreasing between each stage according to the invention.

In an embodiment of the invention the temperature of said cyclones may be decreasing between each stage.

In another embodiment of the invention the operating pressure and temperature of at least the last cyclone may be below the critical point of said supercritical fluid.

Additionally, the means for separating the supercritical fluid from extracted components may comprise or further comprise an activated carbon filter according to an preferred embodiment of the invention.

Furthermore, the separation may according to the invention be performed in a vessel comprising said supercritical fluid in both gaseous state and liquid state, the liquid phase being preferably controlled to a specific level in the vessel.

According to the present invention the separation may be performed in a gravimetric settling chamber comprising said supercritical fluid in both gaseous state and liquid state, the liquid phase being preferably controlled to a specific level in the vessel.

According to an embodiment of the invention said extraction of components may be performed at a temperature of maximum 25 °C less than the boiling point of said components being extracted, preferably at a temperature of maximum 15 °C less than the boiling point of said components being extracted, more preferably at a temperature of maximum 10 °C less than the boiling point of said components being extracted and most preferably at a temperature substantially at or above the boiling point of said components being extracted.

According to another embodiment of the invention said extraction of components from the material in the vessel may be performed at a temperature in vessel, which is close the maximum continuous operating temperature of the material contained in the vessel such as in the range -25 °C to + 25 °C of the maximum continuous operating temperature of the material to be treated, such as in the range -10 °C to + 10 °C of the maximum continuous operating temperature of the material to be treated.

Furthermore, said extraction of components from the material in the vessel may be performed at a temperature in the vessel, which is below the thermal decomposition temperature of said material in the vessel, according to the invention.

Additionally, the temperature in the vessel during said extracting of components from the material contained in the vessel, may according to the present invention be in the range 70-140 C.

According to an embodiment of the invention the pressure in the vessel during said extraction of components from the material contained in the vessel, may be in the range 100-500 bar, such as in the range 120-300 bar.

According to another embodiment of the invention the ratio of the amount of $CO_2$ used to extract said components from the material contained in the vessel to the amount of material contained in the vessel may be in the range 1 kg/kg to 80 kg/kg, such as in the range 1 kg/kg to 60 kg/kg, and preferably in the range 1 kg/kg to 40 kg/kg such as in the range 5 kg/kg to 20 kg/kg.

Advantageously, the components being extracted may according to the invention be components resulting in an undesired smell in the material to be treated.

Additionally, the components being extracted from the cork in the vessel may in another embodiment of the present invention may comprise extraction of organics such as organic solvents, monomers, aromatic oils such as extender oil and organic acids.

In an embodiment of the invention the potential allerghenes may be reduced by at least 10 %, such as reduced by at least 25 %, and preferable reduced by at least 50 %.

Furthermore, the content of Zn may according to the present invention be reduced by at least 10 %, such as reduced by at least 25 %, and preferable reduced by at least 50 %.

In embodiment of the invention inorganic species such as heavy metals such as Zn may substantially be maintained in the material after the treatment.

Additionally, the thermodynamic state in the vessel may according to the present invention be controlled so as to obtain a selective extraction of components from the cork contained in the vessel, while substantially maintaining other extractable components in the material.

Advantageously, said selective extraction may according to the present invention further be controlled by substantially saturating the extraction fluid with components desired to be maintained in the material in the vessel.

According to the invention said method may comprise subsequent extraction steps, wherein the thermodynamic state in each step is controlled so as to obtain a pre-selected state in which a pre-selected extraction of components from the cork in the vessel occur.

Furthermore, the thermodynamic state in the first step may according to the present invention be selected so as to obtain a pre-selected state in which a pre-selected extraction resulting in an undesired smell in the cork to be treated is substantially removed, while maintaining the majority of other extractable compounds such as extender oils, aromatic oils, antioxidants and antiozonants within the material to be treated.

In another embodiment of the present invention the thermodynamic state in the first step may be selected so as the total amount of extract being removed in the first step compared to the total amount of extractables is in the range 10-35 %. The total amount of extractables being determined by e.g. the SOXLETH method (ASTM D1416) using pentane as solvent.

In yet another embodiment of the invention the residual amount of aromatic oils, organic acids, antioxidants and antiozonants in the product may be at least 0.5 weight %, such as at least 1 weight %, and preferably at least 2 weight % such as at least 3 weight %, and the treated material being substantially free of smell.

Furthermore, the thermodynamic state in the first step may according to the present invention be controlled so as the temperature in the vessel may be in the range 65-100 C such as in the range 70-90 C, and is controlled so as the pressure in the vessel may be in the range 100-200 bar such as in the range 140 - 170 bar.

Additionally, the thermodynamic state in the second extraction step may according to the present invention be controlled so as the temperature in the vessel is in the range 80-140 C, and is controlled so as the pressure in vessel is in the range 200-300 bar.

In a preferred embodiment of the invention said method may further comprise at least one step of extraction of components from the cork contained in the vessel, wherein said extraction comprising:

- controlling the thermodynamical state in the vessel so as to obtain a pre-selected state in which extraction of components occur,
- withdrawing from said vessel at least a part of the fluid contained within the vessel during said step(s) of extraction of components from the material contained in the vessel, and feeding it to a re-circulation loop for separation of extracted components from said fluid,
- separating at least partly said extracted components from said fluid at a pressure above the critical pressure of said fluid
- feeding said separated fluid to the vessel.

Furthermore, the pressure in the vessel for said extraction of components may according to the present invention be at least 150 bars, such as at least 200 bar, such as at least 300 bars.

According to the present invention the pressure for said separation of said extracted components from said fluid may at least be 1/2 of the of the pressure in the vessel for said extraction of components, such as at least 2/3 of the pressure in the vessel for said extraction of components, such as at least 3/4 of the pressure in the vessel for said extraction of components.

Advantageously, the thermodynamic state for separation of may according to the present invention be controlled so as the solubility of the extracted components in said fluid is maximum 20 % of the solubility of the extracted components at the pressure in the vessel for said extraction of components, such as is maximum 10 % of the solubility of the extracted components at the pressure in the vessel for said extraction of components, and preferable maximum 5 % of the solubility of the extracted components at the pressure in the vessel for said extraction of components.

Furthermore, said method further may according to the present invention be comprise at least at least one impregnation or coating step for impregnating the material contained in the vessel, wherein said impregnation or coating step comprising controlling the thermodynamically state in the vessel so as to obtain a pre-selected state in which impregnation components, such as one or more reactant contained in the vessel, impregnates or coates the material contained in the vessel.

According to the invention said impregnation or coating step may involve a chemical reaction.

Additionally, the chemical(s) used in said impregnation or coating step may according to the present invention be precursors for a chemical reaction.

Advantageously, said chemical reaction may according to the present invention be a silylation.

In a preferred embodiment of the present invention said chemical(s) may be impregnated or coated in substantially a monolayer on said material contained in the vessel.

In another embodiment of the present invention the surface coverage of said chemical(s) on said material contained in the vessel, may be at least 5 molecules/nm$^2$, such as at least 6 molecules/nm$^2$.

Furthermore, the holding period may according to the present invention be comprise one or more extraction steps, and wherein the extraction step is followed by one or more impregnation steps.

Additionally, the holding period may according to the present invention be comprise one or more extraction step(s), and followed by one or more impregnation step(s), and wherein the impregnation may be followed by one or more step(s) of increasing the temperature, and wherein the one or more steps of increasing the temperature may be followed by one or more steps of decreasing the temperature.

According to an embodiment of the invention the last step(s) of the holding period may comprise one or more extraction step(s).

According to another embodiment of the invention excess impregnation chemical(s) from the one or more impregnation step(s) may be extracted from said material contained in the vessel in said last one or more extraction step(s).

In a preferred embodiment of the invention a supercritical thermodynamical state may be maintained in the vessel during all of the steps in the holding period.

In another preferred embodiment of the invention the holding period may comprise one or more extraction steps, wherein the pressure in the vessel may be kept constant, and wherein the extraction step may be followed by one or more impregnation steps during which the pressure in the vessel may be kept substantially at the same level as during the impregnation step, and wherein no substantially pressure change occur in the vessel during change over from the extraction to the impregnation step.

According to the invention the method may further comprise a further impregnation step following the first impregnation step, and wherein the pressure during further impregnation step may be higher or lower than the pressure during the first impregnation step.

Additionally, the impregnation step or the further impregnation step may according to the present invention be followed by one or more steps of increasing the temperature, preferably while keeping the pressure constant, one or more of the one or more steps of increasing the temperature may preferably be followed by one or more steps of decreasing the temperature, preferably while keeping the pressure constant.

In an embodiment of the present invention said method may further comprise agitating the fluid and/or the material present in the vessel at least part time during the treatment of the material.

In another embodiment of the invention the vessel may be an agitated vessel, such as a fluidised bed, and/or preferably an expanded bed, and/or such as a motor driven mixer such as a rotating drum and/or an impeller.

According to a preferred embodiment of the invention the vessel may be a fluidised bed.

Furthermore, the material being fluidised may according to the present invention be the material to be treated.

According to another preferred embodiment of the invention the material being fluidised may be a bed material not being the material to be treated.

Additionally, the fluidisation may according to the present invention be obtained by the flow of the fluid being fed to the vessel.

Advantageously, said method may according to the present invention be further comprise spraying of coating or impregnation chemical(s) into said agitated vessel in at least part time of said depressurisation step.

According to the present invention said coating or impregnation chemical(s) may be sprayed into said agitated vessel as a slurry.

In a preferred embodiment of the present invention said coating or impregnation chemical(s) may be substantially insoluble in the fluid contained ion the vessel.

In another preferred embodiment of the present invention at least a first part of the fluid withdrawn from the vessel during depressurisation may be fed to a buffer tank having an outlet connected to the vessel either directly or via the re-circulation loop, wherein it is condensed, preferably by direct spraying into the liquid phase of said fluid.

By spraying the fluid direct into the buffer tank and thereby obtaining a condensation direct at the inside walls of the buffer tank in stead of using a condenser, such condensing equipment is no longer needed and it is thereby obtained to save cost and energy.

According to the invention at least a second part of fluid withdrawn from the vessel may be fed to a condenser wherein it is condensed, the condensed fluid being subsequently fed into a buffer tank having an outlet connected to the vessel either directly or via the recirculation loop.

By implementing the mentioned re-circulation or recirculation loop in an embodiment of the present invention the method of treating a material contained in a vessel may be executed without mixing extractants and impregnation chemicals, or without the need to depressurise before impregnation of the material. An efficient process is hereby obtained since the treatment of extracting and impregnating the material may be executed in turns in a continuos process without depressurise the vessel all the way down the starting pressure for then again pressurise the vessel for the subsequent treatment. The re-circulation thereby is time and energy saving.

It further has the advantage of being able of extracting excess reactants such as monomers for a polymerisation reaction in a single stage process.

In an embodiment of the present invention the temperature in the buffer tank may be controlled so as to maintain substantially constant, said controlling being obtained at least partially by splitting the first and the second part of fluid being withdrawn from the vessel and fed to the buffer tank, thereby balancing the heat consumed by the evaporative cooling generated from the fluid being withdrawn from the buffer tank through the outlet thereof.

In another preferred embodiment if the invention the controlling of the temperature in the buffer tank may further comprise controlling the liquid level in the buffer tank by adding make-up fluid from a fluid make-up tank.

Furthermore, said method may according to the present invention comprise several treatment lines operating in parallel and in different states in the cyclic method, and wherein said several treatment lines are connected to said buffer tank and have:

- common feeding system(s) for pressurisation,
- common lines for depressurization including compressors,
- common condenser(s),
- common line(s) for spraying said fluid into the liquid phase
- common make-up system(s)

According to an embodiment of the invention said several treatment lines may comprise 2 to 6 lines, such as 3-4 lines.

Additionally, the pressure in said buffer tank may according to the present invention be in the range 55-70 bars, and preferably in the range 60-70 bars.

In an preferred embodiment of the invention the temperature in said buffer tank is in the range 12-30 C, and preferably in the range 15-25 C.

In another preferred embodiment of the invention the volume of the buffer tank compared to the total system volume of all treatment lines (excluding the buffer tank) may be in the range of 50-300%, such as in the range of 100-150%.

The invention further comprise an apparatus for use in treating a material, said apparatus comprising a vessel adapted to contain material to be treated and a fluid taking part in the treatment, said apparatus further comprising

- pressure means for increasing / decreasing the pressure in the vessel so as to perform at least one pressurisation step in which the pressure in the vessel in increased and at least one depressurisation step in which the pressure in the vessel is decreased
- and a recirculating loop for recirculating at least a part of the fluid, the recirculation loop being adapted to withdrawing from the vessel at least a part of the fluid contained within the vessel and feeding it to the re-circulation loop and subsequently feeding the fluid to the vessel, wherein the fluid present in the re-circulation loop has substantially the same thermodynamical properties as the fluid within the vessel, such as the fluid does not undergo a phase change to a liquid or solid state,

said apparatus further comprising
a fluid recovery device, preferably being condenser, in fluid communication with the vessels, and
wherein said fluid recovery device comprises:

- means for withdrawing gaseous fluid from said fluid recovery device and feeding it to the vessel,
- means for withdrawing liquid fluid from said fluid recovery device and feeding it to the vessel,
- means for condensing fluid from the vessel by cooling
- means for condensing fluid by direct spraying into the liquid phase of said fluid recovery device.
- a heat exchanger immersed in said liquid phase of said fluid recovery device.
  Additionally, said apparatus may according to the invention further comprise
- agitating means for agitating, such as fluidise, the fluid and the material present in the vessel at least part time during treatment of the material.
  Furthermore, said apparatus may in another preferred embodiment of the invention further comprise
- a fluid recovery device, preferably being condenser, in fluid communication with the vessel.

In an additional embodiment of the invention said fluid recovery device may communicate with several vessels such as 2-6 vessels.

BRIEF DESCRIPTION OF THE DRAWINGS

FIG. 1 shows a typical pressure-time curve for a cyclic process for a supercritical treatment.

FIG. 2 shows a diagrammatic representation of the recirculation principle according to the present invention.

Fig: 3 shows an example of the effect of pulsation in an impregnation process according to the present invention.

FIG. 4 shows an example of a prior art cyclic supercritical extraction process.

FIG. 5 shows diagrammatic representation of an extraction process according to the present invention

Fig. 6 shows a diagrammatic representation of a process layout suitable for operating any combination of a supercritical extraction process, a supercritical impregnation step, a particle formation step and a curing step at an elevated temperature.

DETAILED DESCRIPTION OF THE INVENTION AND PREFERRED EMBODIMENTS

The present invention is further illustrated by the drawings.

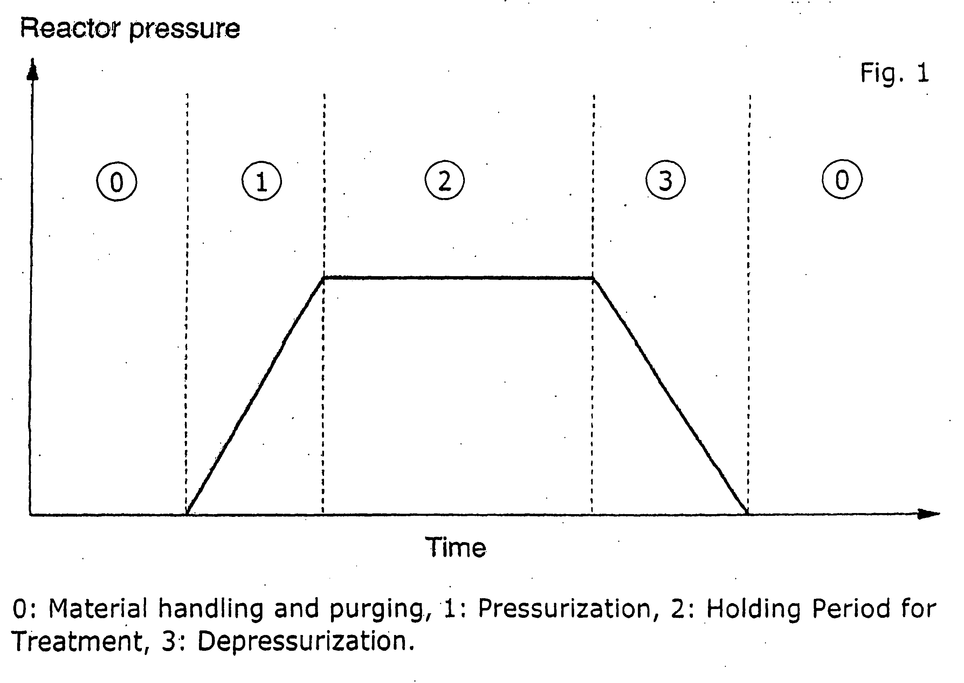

In FIG. 1, a pressure-time curve for a cyclic supercritical treatment process is shown. Initially, the material to be treated is loaded into a pressure vessel. After a certain material handling and purging time, the cyclic supercritical treatment process may be divided in to three consecutive steps:

1) a pressurisation period
2) a holding period for supercritical treatment at elevated pressure
3) a depressurisation period

In the pressurisation period the pressure vessel is pressurised by adding a fluid to the vessel until the pressure in the vessel exceeds the desired treatment pressure. The temperature in the vessel may be controlled by conventional means such as controlling the inlet temperature to the vessel in a heat exchanger before introducing the fluid into the pressure vessel and the temperature of the walls in the vessel, e.g. by using a jacketed pressure vessel with a heating or cooling fluid, electrical heating etc. The rate of pressure increase is shown to be constant, but may have any shape.

The holding period for treatment starts, when the desired pressure and temperature have been established. The treatment process may be an extraction or impregnation process, but may also be a particle formation process. During the holding period for treatment the pressure may be maintained substantially constant, or may be varied according to a predefined schedule as described in the examples.

After the holding period the pressure vessel is depressurised in a controlled manner as further described in the examples.

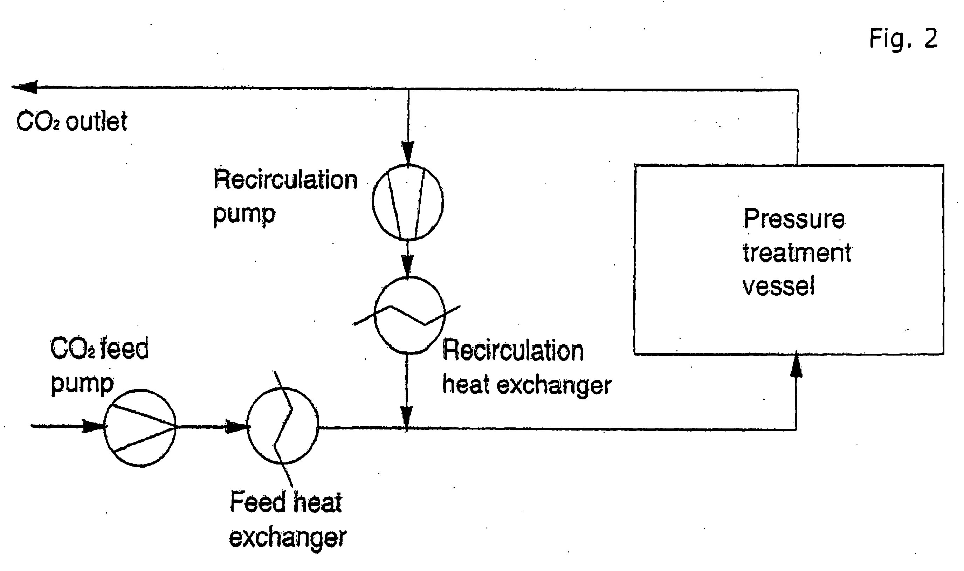

Fig. 2 is a diagrammatic representation of a recirculation principle according to the present invention. The material to be treated is loaded into the pressure treatment vessel. The pressure treatment vessel is pressurised up to the desired operating pressure by feeding $CO_2$ to the pressure vessel by the $CO_2$ feed pump. The temperature of the feed is controlled by the feed heat exchanger. The pressure treatment vessel is depressurised by withdrawing CO2 from the vessel to the $CO_2$ outlet in a controlled manner. From/to a pressure below 70 bars such as below 60 bars, preferable below 40 bars, and advantageously from a pressure below 2 bars, part of the $CO_2$ in the pressure treatment vessel is withdrawn from the vessel to a re-circulation loop by the re-circulation pump, and returned to the pressure vessel after optionally passing a re-circulation heat exchanger for controlling the temperature in the vessel.

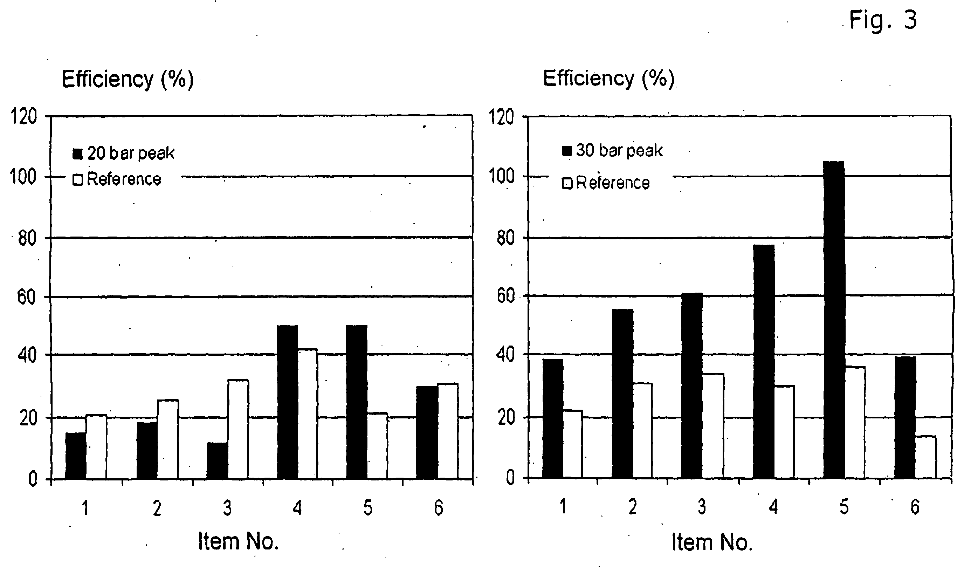

Fig. 3 shows results from a supercritical wood impregnation process not according to the invention, which is further exemplified in the examples 1 and 2.

A porous item to be impregnated is divided into two identical pieces so as to eliminate any effect of variations in the material to be treated.

In the experiment the reference items is first impregnated with an impregnation chemical at a substantially constant pressure of 150 bar and a temperature of 50 °C. The efficiency of the impregnation process is evaluated by the impregnation efficiency defined as the amount of the impregnation chemical present in the $CO_2$ phase compared to the amount of the impregnation chemical deposited in the items after treatment.

In the first experiment, the pressure vessel is first pressurised up to the reference conditions of approximately 150 bars and 50 °C, whereafter the vessel is depressurised to 130 bars under substantially constant temperature, whereafter the pressure vessel is pressurised again to 150 bars using the approximately the same concentration of the impregnation chemical in the $CO_2$ in the vessel. After the pressurisation, the pressure vessel is depressurised in a controlled manner. As seen from the left figure no significant effect on the impregnation efficiency is observed.

A second experiment is conducted in a similar manner, wherein the pressure level after the first depressurisation is reduced to 120 bars instead of 130 bars. As seen from the figure a significant improvement of the impregnation efficiency is obtained.

The results given in this figure is applicable for impregnation of porous materials in general, and in particular for impregnation of materials like rubber and cork.

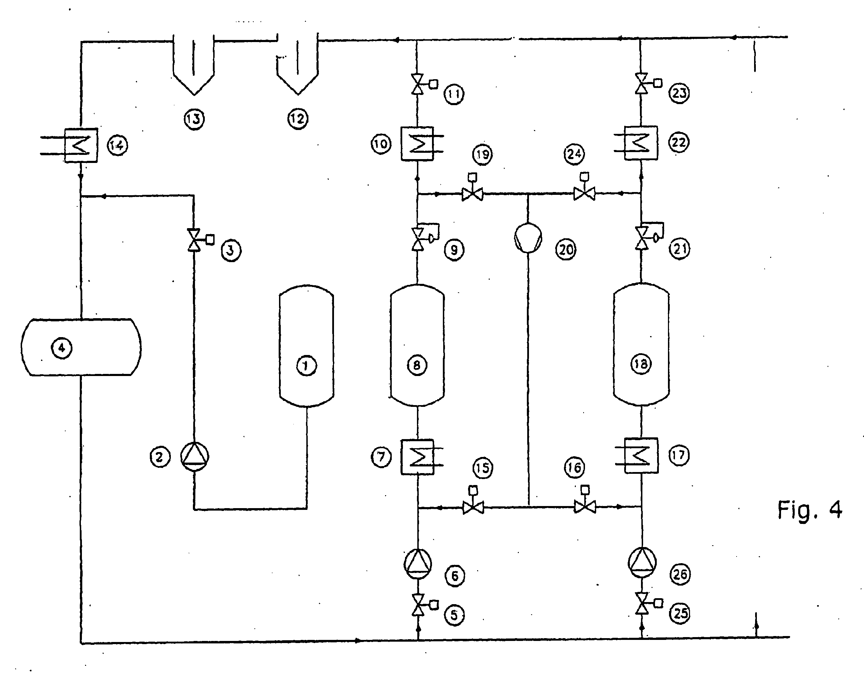

Fig. 4 shows a typical industrial multi vessel process i.e where several extraction vessels are used sequentially in parallel. However, for simplificity only 2 vessels (8, 18) are shown. The operating procedure is only described for the extraction vessel (8), and the procedure will be similar for the extraction vessel (18). The extraction vessel (8) is loaded with the material to be extracted. Liquid carbon dioxide is stored in the storage tank (1). Liquid $CO_2$ is transferred from the storage tank (1) via the pump (2) and the valve (3) to the intermediate storage tank (4).

When the plant is started up, liquid $CO_2$ from the intermediate storage tank (4) is transferred by the pump (6) to the extraction vessel (8), if the valve (5) is open. In the heat exchanger (7) the liquid $CO_3$ is evaporated and the temperature of the gaseous $CO_2$ is controlled. The pressurization of the extraction vessel (8) by means of the pump (6) and the evaporator (7) is continued until the operating pressure in the supercritical region is reached.

The cyclic supercritical extraction process is now performed by expanding $CO_2$ through the control valve (9), adjusting the temperature in the heat exchanger (10) and further expanding the $CO_2$ through the valve (11) and subsequently separating the extracted material in the separation units (12, 13). Subsequently the $CO_2$ is liquefied in the condenser (14) and returned to the intermediate storage (4), from where it is transferred back into the extraction vessel via the pump (6) and the evaporator (7).

Supercritical $CO_2$ is thus continuously circulated through the extraction vessel (8) for the required amount of time to reach the required extraction yield.

After the extraction process has been finalized the vessel (8) are depressurized. This is in the prior art process accomplished by opening valves (15, 16). The pressure in vessel (18) is substantial ambient pressure and by opening the valves (15, 16) the pressures between vessels (8, 18) are equalized. By the expansion of the $CO_2$ from vessel (8) to vessel (18) the $CO_2$ is cooled and to avoid formation of liquid $CO_2$ or dry ice, heat has to be added in the heat exchangers (7, 17).

Further emptying of vessel (8) is accomplished by extracting $CO_2$ from vessel (8) via the valves (9, 19) and the compressor (20). As the temperature of the $CO_2$ is increased during compression, the $CO_2$ gas stream has to be cooled in heat exchanger (17) before entering the vessel (18).

As the pressure in vessel (8) reaches a level of typically 2-5 bar the emptying operation will stop. The residual $CO_2$ in vessel (8) is vented to the atmosphere and additional $CO_2$ is added to vessel (18) from liquid intermediate storage (4) through the pump (20) and heat exchanger (17) until the operating pressure of vessel (18) is reached. The cyclic extraction process can now be performed with vessel (18) in the same manner as described for vessel (8).

A disadvantage of such prior art process is that the energy consumption is high due to the liquefaction of the fluid and due to the need for re-heating the fluid before entering the pressure vessel. Further equipment costs are increased due to a high heat transfer area required in the condenser and in the heating/cooling system compared to the present invention.

A further disadvantage of such prior art process is the fact that the rate of pressurization and depressurization of the vessels cannot be controlled independently as two vessels at all times are interconnected. Generally by transferring $CO_2$ directly from one vessel to the next, the possibility of optimizing both pressurization and depressurization rates independently are lost.

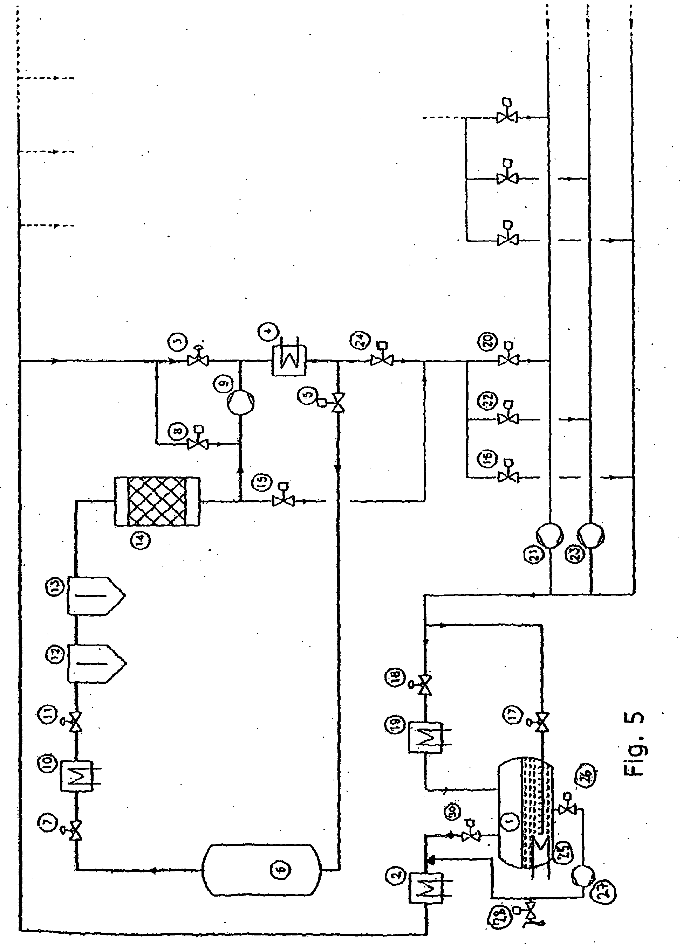

Fig. 5 illustrates the principles of an industrial scale supercritical process for the extraction of Tri-Chloro-Anisole (TCA) from cork according to the present invention. TCA represents a major quality problem for wines stored in bottles with cork stoppers due to the development of the so-called "cork taste". Development of cork taste may destroy the wine and make it undrinkable.

It should be understood that process comprises several extraction lines operating in parallel as indicated in the figure. Typically a process according to the present invention comprises 2-6 lines operating sequentially in different stages of the cyclic process. The various lines share some major components, such as the buffer tank (1), the control valves (17), (18), the condenser (19), the heat exchanger (2), and the compressors (21), (23). These shared components are described in details below. For simplification only one vessel is shown in the figure.

A typical cyclic supercritical extraction process is performed as follows:

$CO_2$ is stored/recovered in a common buffer tank (1) shared between several extraction lines as indicated on the figure. The pressure in the buffer tank (1) will typically be in the range 50-70 bars, and preferably at a pressure of approximately 60 bars. The level of the liquid $CO_2$ in the buffer tank (1) is controlled by pumping liquid $CO_2$ from a make up tank (not shown in the drawing), and the pressure is controlled by controlling the temperature in the buffer tank (1). When starting the pressurisation of vessel (6) gaseous $CO_2$ is drawn from buffer tank (1) and piped at a predetermined rate through a heat exchanger (2), valve (3), heat exchanger (4), and valve (5). Optionally liquid $CO_2$ may also be withdrawn from the buffer tank through the valve (26), the pump (27) and the valve (28). Withdrawing gaseous $CO_2$ from the buffer tank (1) generates an evaporative cooling in the buffer tank (1), which is further described below. From a pressure of about 2 bar part of the $CO_2$ in the vessel is withdrawn and re-circulated by the compressor (9). The $CO_2$ from the compressor (9) is mixed with the $CO_2$ from the buffer tank (1) after the valve (3). When the vessel (6) has reached a pressure slightly below the pressure in the buffer tank, then valve (3) is closed and valve (8) is opened and the compressor (9) is used to compress the gaseous $CO_2$ from approx. 60 bar to the final supercritical pressure for the extraction, which typically is 120 bar. Throughout the pressurisation process the compressor (9) operates and provides a large re-circulation rate through the vessel (6). This allows for optimum control of temperature and heat and mass transfer throughout the vessel. The extraction process is accomplished by purging typically 10-100 kg $CO_2$ per kg cork granulate through the vessel (6) at a temperature of typically 60° C. The $CO_2$ exiting vessel (6) is expanded through the valve (7) reheated in the heat exchanger (10) and expanded through the valve (11). Subsequently TCA and other components like waxes are removed in the separators (12, 13) whereupon the $CO_2$ is cleaned for residual content of TCA in an active carbon filter (14). The $CO_2$ exiting the carbon filter (14) is recompressed in the compressor (9) and the temperature controlled in the heat exchanger (4) to provide the required pressure and temperature for the extraction in the vessel (6). When depressurising the vessel (6) vapour phase $CO_2$ is piped in a controlled manner through valve (15), valve (16). The major part of the $CO_2$ is generally entering the buffer tank (1) through valve (17), from where it is condensed by direct spraying into the liquid $CO_2$ phase in the buffer tank (1). Part of the $CO_2$ pass through the valve (18) into the condenser (19), where the $CO_2$ gas is liquefied before entering the buffer tank (1). As heat is generated from the direct condensation in the buffer tank (1), the heat needs to be removed in order maintain a substantially constant temperature in the buffer tank (1). This is done by balancing the heat consumed by the evaporative cooling generated from the gas being withdrawn from the buffer tank (1). This balancing of the temperature in the buffer tank is performed by

a) Controlling the split between the amount of $CO_2$ entering the buffer tank (1) as a liquid through the valve (18) and the condenser (19), and the amount of $CO_2$ being introduced directly into the liquid phase in the buffer tank (1) through the valve (17),

b) Fine tuning of the temperature in the buffer tank by extracting or adding heat through the heat exchanger (25) immersed in the liquid phase in the buffer tank (1) and/or optionally withdrawing liquid $CO_2$ from the buffer tank (1) to an external heat exchanger (not shown) and re-circulating the liquid $CO_2$ to the buffer tank (1),

c) Controlling the liquid level in the buffer tank (1) by adding make up $CO_2$ from a $CO_2$ make-up tank (not shown)

It should be noticed that the buffer tank (1) needs to have a certain volume in order to work properly as a buffer tank, and in order to damp potential fluctuations of the temperature and pressure in the tank. The volume of the buffer tank compared to the total system volume of all lines (excluding the buffer tank (1)) is generally in the range 50-300 %, and preferably in the range 100-150 %.

The further depressurisation of extraction vessel (6) from approx. 60 bars to a pressure in the range 20-30 bars is performed through valve (15), valve (20) and compressor (21). The valve (24) is closed during this operation to ensure that no back flow occurs. The compressor (21) will generally be a one-stage compressor. After the compressor the $CO_2$ is discharged to the buffer tank (1) through the valves (17) and/or (18) and heat exchanger (19) as described above for the pressure range 120-60 bars.

It should be noticed that depressurisation from 60 to a pressure in the range 20-30 bars also could be performed using the re-circulation compressor (9), but a system of two compressors is generally preferred due to capacity and redundancy considerations.

The depressurisation of the vessel from a pressure in the range 20-30 bars to a pressure in the range 2-6 bars (6) is performed through the valve (22) by the compressor (23). After the compressor the $CO_2$ is again discharged to the buffer tank (1) through the valves (17) and/or (18) and heat exchanger (19) as described above. The final depressurisation is performed by venting off the fluid vessel to the atmosphere (not shown). The pressure for this depressurisation step is set by the desired recovery of the $CO_2$. If a high $CO_2$ recovery is desired, the pressure for the final stage will typically be in the range 1-3 bars above ambient pressure. In this case the compressor (23) will comprise a three stage compressor. If a lower $CO_2$ recovery is desired, the compressor (23) may comprise a 2 stage compressor.

It should be noticed that the compressors (21, 23) are generally only in used in a limited part of cyclic process, such as 10-35 % of the total cycle time. As such compressors are relatively expensive the compressors (21, 23) are preferably shared between several extraction lines as indicated in the figure. It should further be noticed that the compressors (21, 23) may comprise more than one compressor operating in the same pressure range in order to fulfil redundancy or economical demands.

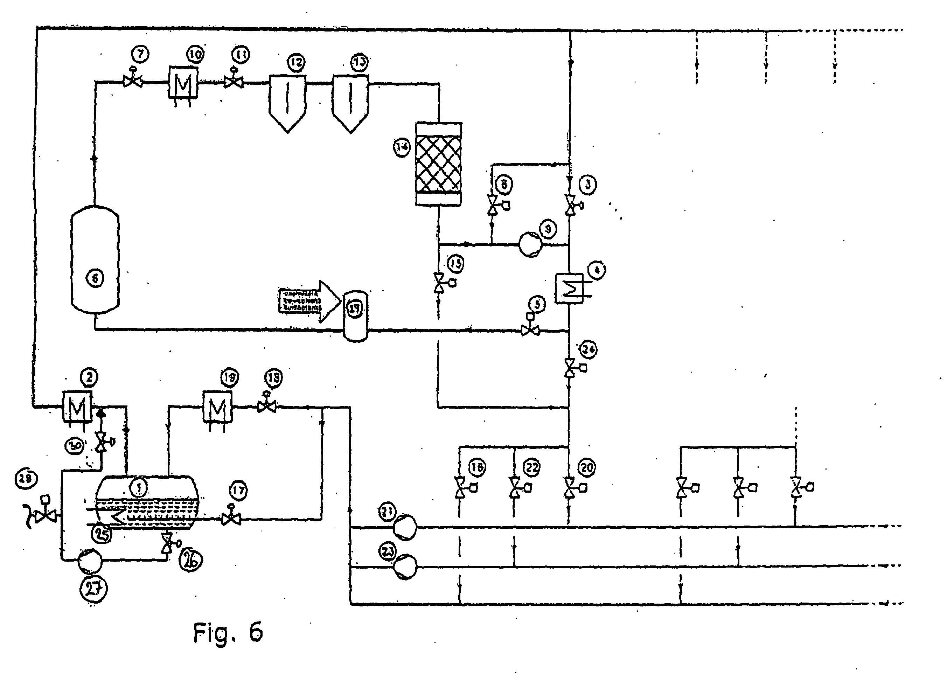

Fig. 6 shows a diagrammatic representation of a process layout suitable for operating any combination of steps of a supercritical extraction step, a supercritical impregnation step, a particle formation step, and/or a curing step at an elevated temperature. Compared to the extraction process according to the present invention shown in Fig. 5, this process diagram further comprise a mixer vessel (29) in the re-circulation loop for addition of chemical(s), and/or cosolvent (s)and/or surfactants. The mixer is preferably containing a high surface area packing material so as to provide a high contact area for addition of said chemical(s), and/or cosolvent(s), and/or surfactant(s). It should be understood that said chemical(s), cosolvent(s) and/or surfactant(s) may be added to the same vessel but said re-circulation loop may comprise more than one mixer for addition of said chemical(s), and/or cosolvent(s) and/or surfactants separately.

Preferred combinations of said supercritical extraction step(s), supercritical impregnation step(s) and curing step(s) at elevated temperature step are:

a) An extraction process, wherein the holding period for extraction is followed by a holding period for impregnation at substantially the same pressure level as for the holding period for extraction.

b) An extraction process, wherein the holding period for extraction is followed by a holding period for impregnation at substantially the same pressure level as for the holding period for extraction, and further followed by a final extraction process to remove excess impregnation chemicals.

c) An extraction process, wherein the holding period for extraction is followed by a holding period for impregnation at substantially the same pressure level and wherein said impregnation period is followed by a curing step at elevated temperature, and optionally finalised by a final extraction step before depressurisation.

d) A process as described in d), wherein the impregnation step and subsequent curing step at elevated temperature is repeated multiple times so as to the control the impregnation level.

EXAMPLES

ILLUSTRATIVE EXAMPLE 1: not according to invention

CYCLIC PROCESS FOR SUPERCRITICAL IMPREGNATION

The conventional supercritical impregnation process includes 3 consecutive steps:

The material to be treated is introduced into a pressure vessel.

In the first step the vessel is pressurized by adding a fluid to the reactor, until the pressure in the vessel exceeds the desired pressure of said fluid. The temperature of the fluid may be controlled by conventional means before the introduction into the vessel, and the temperature in the reactor is further controlled by controlling the wall temperature, to a level exceeding the desired temperature of the fluid. At the established temperature and pressure the enclosed fluid in the vessel enters the supercritical state, and the impregnation compounds become soluble in the fluid. As pressurisation of the vessel is achieved by introducing fluid, and as the fluid by definition is compressible, further compression of the fluid takes place in the vessel. The derived heat of compression is dissipated in the materials enclosed in the reactor, and finally removed through the reactor walls. The heat of compression may lead to a significant temperature increase. If for example carbon dioxide is compressed from 1 bar to 200, which is a normal impregnation pressure, the corresponding adiabatic temperature increase exceeds 100 °C. It is obvious to one skilled in the art, that the presence of a solid porous material filling most of the internal vessel volume is hindering the dissipation of heat through the walls, as convective heat transport is hindered, and that the effect of the hindrance is proportional to the distance from the vessel center to the wall, i.e. increasing with increasing vessel diameter. Therefore large-scale supercritical impregnation in conventional equipment is accompanied by an unwanted heating of the material being impregnated, which might lead to crucial damage of thermo sensitive materials like wood. Furthermore, the flow of the supercritical fluid into the porous material to be impregnated creates a force acting on the material, which might cause further damage, particularly as the mechanical strength of the material is reduced at increasing temperature.

The second step is a treatment at practically constant temperature and pressure, during which impregnation compounds are distributed throughout the material to be impregnated. Furthermore, during this step the heat of compression is dissipated to the vessel walls, if sufficient residence time is allowed, establishing the intended temperature throughout the reactor.

Upon the treatment, depressurisation is conducted in the third step, by controlled evacuation of the fluid from the vessel. The expansion of the fluid leads to reduced solubility of the impregnation compounds, which therefore precipitate at the internal surfaces of the porous material, providing the intended impregnation. The energy required to expand the fluid is taken from the remaining fluid, and the other materials in the reactor, and finally balanced by heat introduced through the reactor walls. During the depressurisation the expanding fluid is flowing from the inside to the outside of the porous material to be impregnated. As heat is supplied through the reactor walls and required inside the porous material, heat and mass fluxes are oppositely directed, causing a very poor heat conductance. Therefore local cold spots are formed inside the porous material, at which condensation of the expanding fluid might occur, once the critical pressure and temperature is passed. Formation of liquid in the pores of the material dramatically increases the flow resistance, leading to formation of very large forces acting on the porous structure, which therefore shows tendency to cracking or bursting. Once again, the impact of the heat transfer hindrance is increased at increasing vessel diameter. In order to avoid structural damage to the impregnated material, a very slow depressurisation rate has to be applied.

ILLUSTRATIVE EXAMPLE 2 not according to invention.

CYCLIC PULSATION PROCESS FOR SUPERCRITICAL IMPREGNATION

During the holding period for impregnation period of the supercritical impregnation, as described in the example 1, the pressure and temperature are maintained practically constant. Consequently distribution of the impregnation compounds in the porous material to be impregnated is mainly due to diffusion, as no convective supercritical solvent flow exists inside the porous material. To enhance and accelerate the impregnation compound distribution, a pressure pulsation may be induced during the impregnation period, creating a convective flow inside the porous structures. In order to preserve the dissolved impregnation compounds inside the vessel, the pressure pulsation is preferably induced by a pulsation of the supercritical solvent inlet temperature, i.e. by alternating in a cyclic pattern the set point of the heat exchanger in the re-circulation loop. By pulsating the pressure, a pumping effect is created in the porous material, which very efficiently equals out any gradients in temperature or solute concentrations existing in the material.

A further benefit from the pressure pulsation during the impregnation period may be derived in the case where the lower limit of the cyclic pressure pulsation is below the solubility limit of the impregnation compounds at the applied temperature and intended concentration of impregnation compounds in the supercritical solvent. The solubility of a substance in a supercritical solvent is to a first approximation determined by the solvent temperature and density, i.e. by reactor temperature and pressure. The solubility limit is defined as the lower pressure at a certain temperature, at which the intended amount of a substance is soluble. If the pressure is reduced below this limit, precipitation takes place.

If a supercritical impregnation is executed at an impregnation pressure above the solubility limit, but with pressure pulsation reducing the reactor pressure below the solubility limit during the impregnation period, the following is taking place; during the last part of the pressurization and the first part of the impregnation period, the porous structure will be filled with supercritical solvent containing dissolved impregnation compounds. During the pressure reduction part of the pulse the solubility limit is broken, and precipitation of the dissolved compounds on the interior surfaces of the porous material takes place. During the pressurization part of the pulse, supercritical solvent is introduced into the porous structure from the reactor bulk, carrying in more dissolved impregnation compounds, which are precipitated during the next pulse. The net result is an active transport of impregnation compounds into the material to be impregnated caused by the pressure pulsation.

The effect of such pulsation is verified in experiments, impregnating spruce cut in pieces. Every log is parted in two identical pieces, with one serving as reference, i.e. being impregnated according to the method described in example 2, and the other being impregnated with pulsation, and otherwise identical process parameters. The wood is impregnated at a pressure of 150 bar and a temperature of 50 °C, with an impregnation compound addition corresponding to a solubility limit of approximately 125 bar. The concentration of impregnation compound precipitated in the wood is determined by chemical analysis. The expected deposition of the compound is calculated as the concentration dissolved in the bulk solvent phase, multiplied with the solvent volume entrapped in the wood at impregnation conditions, i.e. the deposition achieved if the total amount of solvent introduced into the wood was carrying a full load of impregnation compound. The impregnation efficiency is defined as the ratio of the measured deposition to the expected deposition.

The impregnation efficiency derived from pulsating impregnation above the solubility limit is described in the left part of the figure, and denoted "20 bar peak". The effect of pulsation above the solubility limit is rather limited, as no significant increase in impregnation efficiency is found, when compared to the reference pieces.

Impregnation with pulsation below the solubility limit is shown in the right part of the figure, and denoted "30 bar peak". The effect of pulsation below the solubility limit is significant. The impregnation efficiency is doubled, when compared to the reference logs.

ILLUSTRATIVE EXAMPLE 3

CYCLIC SUPERCRITICAL EXTRACTION PROCESS WITH RECIRCULATION

One aspect of the present invention involves a cyclic process for supercritical extraction treatment of materials.

Hence, in a preferred embodiment of the present invention the material to be treated by the supercritical extraction process is initially loaded in to a pressure vessel.

In many applications, the cyclic process is initiated by purging the vessel with the specific fluid used in the cyclic process in order to minimize contamination of the fluid. This purging may be conducted by applying a vacuum (pressure below ambient pressure) to the vessel, while feeding the specific fluid to the vessel for a certain period of time. Typically this purging time will be in the range 1-20 minutes. In other cases this purging may be performed by pressurisation of the vessel up to a pressure of 0,5-5 bars above ambient pressure and venting the vessel until the pressure is substantially the same as ambient pressure. It should be understood that any combination of purging using a vacuum and venting from a pressure above ambient pressure may be applied and that this procedure may be repeated.

After the purging period the vessel is pressurised by the specific fluid at a predetermined inlet temperature to the vessel and a predetermined rate of pressure increase in the vessel.

In many applications the inlet temperature to the vessel will be controlled to achieve a temperature within the pressure vessel above the condensation temperature of the specific fluid, and below a certain maximum temperature dictated by the material to be treated in the vessel. The inlet temperature of supercritical fluid is typically controlled in the range 0-200 °C, such as 0-150°C, and preferably in the range 15-100 °C and more preferably in the range 35-60 °C during pressurization. The set point for the inlet temperature may be constant during the pressurisation period, but in many applications according to the present invention the inlet temperature is increasing during the pressurisation period.

As described above control of temperature within the vessel is critical for many applications. In the prior art, temperature control is performed by control of inlet temperature and/or control of the inlet and outlet temperature of a heating or cooling fluid fed to a jacketed vessel. However, applying such systems for large diameter vessels creates temperature gradients within the vessels as the heat transfer area is not large enough to ensure sufficient heat transfer capacity.

Hence, in a preferred embodiment of the present invention part of the fluid is withdrawn from the vessel in at least part of the pressurisation period, and fed to an external re-circulation loop comprising at least one heat exchanger for adding or extracting heat from the fluid, where after the fluid is re-circulated to the pressure vessel after conditioning.

It is further preferred that the fluid do not undergo a phase change in the external re-circulation loop during the pressurisation period.

The withdrawing of the fluid from the vessel to the external re-circulation loop is preferably performed from a pressure below 40 bars such as a pressure below 20 bar, and advantageous at a pressure below 2 bars.

In order to maximize the effect of the re-circulation the fluid flow withdrawn needs to have a certain size. Hence, in a preferred embodiment according to the present invention, the fluid flow corresponds to replacement of at least one vessel volume per hour, such as at least 5 vessel volumes per hour, and preferably at least 10 vessel volumes per hour and more preferably between 10-50 vessel volumes per hour and advantageously in the range 10-20 vessel volumes per hour.

The rate of pressure increase is typically in the range 0,05-100 bar/min, such as 0,1-20 bar/min and preferably in the range 0,1-15 bar/min, such as in the range 0,2-10 bar/min.

The rate of pressure increase may be constant or vary during the pressurisation period. Generally means for pressurisation have a constant volumetric flow rate. Hence, the maximum mass flow rate of said means increases with the density of the fluid used for pressurisation. Hence, for a constant temperature within the vessel the rate of pressure increase will vary with the fluid density if said means were operating at maximum capacity during the pressurisation period. However, in addition to the increase of the mass transfer mass flow rate, the rate of pressure increase may also be obtained by increasing the temperature to the vessel or by a combination of the two.

However, many materials relevant for the present invention are characterised by loosing/decreasing their mechanical strength at temperatures above a certain level and increasing the pressurisation rate above a certain level at specific temperatures results in pressure damages of the material being treated. It has been found that certain pressure intervals exist in which the risk of such pressure damages is particularly high.

Hence, one aspect of the present invention involves controlling the rate of pressurisation and the temperature in specific pressure intervals during the pressurisation period, while operating higher rates outside this interval. It has been found that the rate of pressure increase is particularly critical in the pressure range from 40 to 120 bars, such as in the range 60 to 110 bars, and in particular in the range 65 to 100 bars. Hence, in a preferred embodiment the rate of pressurisation in at least part of the interval 40 to 120 bars is at the most one half of the maximum rate of pressurisation outside this range, such as one third of the maximum rate of pressurisation, and preferably at the most one fifth of the maximum rate of pressurisation, and more preferably at the most one tenth of maximum rate of pressurisation outside this pressure range.

In many applications, the majority of the fluid fed to the vessel is $CO_2$. However, it may also comprise other fluids such as one or more co-solvents, one or more surfactants or impurities such as air and/or water and/or traces of the extracted compounds.

Suitable surfactants are hydrocarbons and fluorocarbons preferably having a hydrophilic/lipophilic balance value of less than 15, where the HLB value is determined according to the following formula:

$$\text{HLB} = 7 + \text{sum(hydrophilic group numbers)} - \text{sum(lipophilic group numbers)}$$

Examples and descriptions of surfactants can be found in the prior art e.g. WO9627704 and EP0083890, which hereby with respect to disclosure concerning surfactants and their preparation are incorporated herein by reference.

The temperature and pressure during the holding period for extraction depend of the specific substrate to be treated and the species to be extracted.

Examples of suitable co-solvents are water, ethane, ethylene, propane, butane, sulfurhexafluoride, nitousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereoff.

The pressure during the holding period for extraction will typically be in the range 85-500 bar. The target temperature during the extraction period will typically be 35-200 °C such as 40-100 °C.

During the holding period for extraction, part of the fluid is continuously withdrawn from the vessel. The extracted species is separated from the extraction fluid by decreasing the pressure in one or more steps. Each step comprising a separator for separating said extracted compounds from the extraction fluid. Non-limiting examples of suitable separators are gravimetric settling chambers, cyclones and polyphase separators. After separation of the extracted species from the extraction fluid, the extraction fluid may be further purified in an activated carbon filter before re-circulation to the pressure vessel.

The duration of the holding period for extraction will typically be in the range 5-300 minutes.

As for the pressurisation period the re-circulation flow rate during the holding period needs to be of a certain size in order to enhance mass transfer and to obtain a substantially uniform extraction quality in the whole pressure vessel. Hence, in a preferred embodiment according to the present invention, the fluid flow withdrawn corresponds to replacement of at least one vessel volume per hour, such as at least 5 vessel volumes per hour, and preferably at least 10 vessel volumes per hour and more preferably between 10-50 vessel volumes per hour and advantageously in the range 10-20 vessel volumes per hour.

After the pressurisation period, the vessel is depressurised at a controlled temperature and rate of depressurisation.

Hence, in another aspect of the present invention part of the fluid is withdrawn from the vessel in at least part of the depressurisation period, and fed to an external re-circulation loop comprising at least one heat exchanger for adding or extracting heat from the fluid, where after the fluid is re-circulated to the pressure vessel after conditioning. It is further preferred that the fluid do not undergo a phase change in the external re-circulation loop during the depressurisation period.

For some materials the inlet temperature in at least part of the depressurisation period may advantageously be increased compared to the inlet temperature of the holding in order to compensate for the considerable cooling arising from the expansion. Typically, the inlet temperature during depressurisation may be increased by up to 10 °C, such as up to 25 °C compared to the inlet temperature during the holding period. The actual inlet temperature during depressurisation will typically be maintained in the range 35-70 C at pressures above 40 bars.

As for the pressurisation and holding periods, the re-circulation flow rate during the depressurisation period needs to be of a certain size in order to ensure substantially uniform pressure-, temperature-and density conditions within the vessel. Hence, in a preferred embodiment according to the present invention, the fluid flow withdrawn during the depressurisation period corresponds to replacement of at least one vessel volume per hour, such as at least 5 vessel volumes per hour, and preferably at least 10 vessel volumes per hour and more preferably between 10-50 vessel volumes per hour and advantageously in the range 10-20 vessel volumes per hour.

According to the present invention the rate of depressurisation is typically in the range 0,05-100 bar/min, such as 0,1-20 bar/min and preferably in the range 0,1-15 bar/min, such as in the range 0,2-10 bar/min.

It has further been found that many materials may be damaged during depressurisation if the depressurisation rate is too high in specific pressure regions, while operation in other regions can be performed at considerable higher depressurisation rates. More specifically it has been found that the rate of depressurisation is critical at pressures below 110 bars, such below 90 bars, and in particular in the range 15 to 90 bars. Outside this range operation at considerable higher depressurisation rates is possible without damaging the material.

Hence, in a preferred embodiment of the present invention, the rate of depressurisation in at least part of the pressure interval below 110 bars is at the most one half of the maximum rate of depressurisation outside this range, such as one third of the maximum rate of depressurisation, and preferably at the most one fifth of the maximum rate of depressurisation, and more preferably at the most one tenth of maximum rate of depressurisation outside this pressure range.

The depressurisation period may further comprise one or more holding periods at constant pressure in which the pressure and temperature conditions inside the material is allowed to stabilise.

In the pressure interval above 2-5 baro the expanded fluid is typically recovered for reuse. Below a pressure below 5 baro such as below 2 baro, the fluid is typically vented off at a controlled depressurisation rate.

Before opening the pressure vessel and unloading the material, the vessel is generally purged with air in order to avoid any exposure risk by the fluid, when opening the vessel. This purging may be conducted by applying a vacuum (pressure below ambient pressure) to the vessel, while feeding air to the vessel for a certain period of time. Typically this purging time will be in the range 1-20 minutes. In other cases this purging may be performed by pressurisation of the vessel with air up to a pressure of 0,5-5 bars above ambient pressure and venting the vessel until the pressure is substantially the same as ambient pressure. It should be understood that any combination of purging using a vacuum and venting from a pressure above ambient pressure may be applied and that this procedure may be repeated.

ILLUSTRATIVE EXAMPLE 4

CYCLIC SUPERCRITICAL EXTRACTION PROCESS WITH RECIRCULATION AND PULSATION

A substantial discussion of the many uses of supercritical fluid extraction is set forth in the text "supercritical Fluid Extraction" by Mark McHugh and Val Krukonis (Butterworth-Heinmann, 1994). Supercrical fluid extraction is often applied for materials comprising confined spaces i.e. micro- or nanoporous structures. Despite higher diffusivity than liquids, supercritical fluids still exhibit limited ability to rapidly transfer extracted material from confined spaces to a bulk supercritical phase. Lack of thorough mixing of the fluid in the bulk phase, and between the fluid in the bulk phase and the fluid in the confined spaces limits the mass transfer rate to essentially the diffusion rate of the solute(s) [see e.g. EP 1,265,683]. It should further be noticed that a pressure and/or temperature gradient generally exist between the bulk phase and the centre of the confined space thereby creating a convective transport of the fluid into the confined space. Thus, the diffusive transport of solutes needs to take place in the opposite direction of the convective transport, thereby reducing the efficiency of the process and thereby increasing processing costs.

Various attempts have been made to by apply pressure pulses to provide a pumping effect to address this problem. Wetmore et al (US 5,514,220) teaches that cleaning of porous material can be improved by raising or spiking the extraction pressure by at least 103 bar between the uppermost and lowermost levels of extraction pressure. Other examples of pressure pulse cleaning are given in US 5, 599, 381, US 4, 163, 580, and US 4,059,308). Common for these prior methods is that while such large pressure swings provides significant improved extraction efficiencies (up to 7 fold), they result in severe cooling of the supercritical fluid and the pressure vessel due to the Joule-Thompson effect. For instance, at a temperature of 50 °C a pressure drop of 103 bars results in an adiabatic drop in temperature of approximately 18,5 °C. Such large pressure pulses and temperature drops are undesirable as they may induce fatigue problems of the pressure vessel, and further may cause the fluid to condense either in the confined spaces (capillary condensation) or even in the bulk phase. Horhota et al (EP 1,265,583) discloses a pressure modulation technique, where repeated pressure pulses of less than 30 % relative difference between the uppermost and lowermost pressure levels are applied in an attempt to overcome the drawbacks of the large pressure pulse techniques. Small pressure pulses according EP 1,265,583 may provide enhanced mixing in bulk phase, and may be suitable for applications such as supercritical parts cleaning. However, small pressure pulses will not create the desired significant pumping effect, when applied for low permeability materials such as micro- or nanoporous materials.

A further objective of the present invention is to provide a method for improving the mass and heat transfer in a cyclic dense fluid extraction process not suffering the drawbacks in the prior art.

Hence, according to an aspect of the present invention a cyclic dense fluid extraction process is performed as described in example 3, wherein

- part of the fluid is continuously withdrawn from the pressure vessel during the holding period,
- the extracted species is separated from the extraction fluid by decreasing the pressure in one or more steps,
- each of said step comprises separation means for separating said extracted compounds from the fluid, said separated fluid is fed to one or more heat exchanger(s) for addition or extraction of heat,
- and re-circulated to the pressure vessel

characterised in that the inlet temperature to the vessel is modulated between two or more temperature levels so as to provide a modulation in the fluid density within the vessel.

In a preferred embodiment the uppermost and lowermost levels of the inlet temperature is selected so as to provide a density change between the uppermost and the lowermost level of up 75 %, such as up to 50 %, and preferable up to 30 %.

The temperature modulation is generally performed at least two times and may be repeated multiple times such as 5-100 times.

In order to achieve the desired efficiency, the volume of the fluid withdrawn from the pressure vessel needs to be of a certain size such as corresponding to replacement of at least 5 vessel volumes per hour and preferably in the range 10-50 vessel volumes per hour such as replacement of 10-20 vessel volumes per hour

The temperature modulation is in particular effective for enhancing mass- and heat transfer efficiency for a supercritical extraction process during the holding period. However, temperature modulation also be applied in the pressurisation and/or the depressurisation period for minimisation of the temperature-and/or pressure gradients between the bulk phase and the centre of a confined space. This particularly relevant in relation to the treatment of low permeability materials containing confined spaced in a micro- or nanoporous structure.

In another aspect of the present invention, the temperature modulation of the inlet temperature is performed in combination with a pressure pulsation technique.

In a further aspect of the present invention said temperature modulation is performed during the holding period and combined with an overall pressure control loop for maintaining the pressure in the pressure vessel substantially constant by adding or extracting fluid to/from the pressure vessel.

In another preferred embodiment of the present invention the temperature modulation of the inlet is combined with a pressure modulation or pressure pulsation technique, wherein the lowermost pressure level are obtained at substantially the same time as the uppermost temperature level and vice versa.

ILLUSTRATIVE EXAMPLE 5

CYCLIC SUPERCRITICAL TREATMENT OF PARTICULATE MATTER

Many important aspects of the present invention involve supercritical treatment of particulate matter. In such applications it is often desirable to introduce movement and/or mixing of/in the particulate phase. Hence, for such applications it may further be advantageous to use an agitated vessel such as a fluidised bed or a motor driven mixer such as an impeller or rotating drum in addition to the recirculation and pulsation methods described herein.

ILLUSTRATIVE EXAMPLE 6

CYCLIC SUPERCRITICAL EXTRACTION AND IMPREGNATION

Another aspect of the present invention involves the supercritical treatment of a material as described in the examples 3-5, wherein the material subsequent to the holding period for extraction, further undergoes a holding period for impregnation prior to the depressurisation period. Said impregnation period is preferably performed at substantially the same average pressure as for the extraction period.
During said holding period for impregnation part of the fluid is withdrawn from the pressure vessel and fed to an external re-circulation loop further comprising at least one mixer vessel for addition of impregnation chemicals and/or co-solvents and/or surfactants to the fluid before re-circulating the fluid to the pressure vessel. Said mixing vessel(s) for addition of chemicals are preferable positioned after the heat exchanger(s) for adding or extracting heat and is operating at substantially the same pressure as the pressure within the pressure vessels.
The chemicals may be added to the mixer vessel at the beginning of the cyclic process, or at any part of the cyclic process.
It is further generally preferred to apply a pulsation method as described in example 2 and 4 in both the holding period for extraction and the holding period for impregnation in order to improve the effiency of both the extraction and impregnation process. Hence, in a preferred embodiment according to the present invention part of the fluid is continuously withdrawn from the pressure vessel and fed to a re-circulation loop comprising one or more heat exchanger(s) for addition or extraction of heat, and re-circulated to the pressure vessel. The inlet temperature to the vessel is modulated between two or more temperature levels in order to provide a modulation in the fluid density within the vessel, while an overall control loop is maintaining the pressure within the pressure vessel substantially constant by adding or extracting fluid to/from the pressure vessel.
After the holding period for impregnation the pressure vessel is depressurised according to the methods described in examples 3-5.

**Claims**

1.  A method of treating cork contained in a vessel, said method involves as a fluid carbon dioxide present in the vessel and comprising at least one pressurisation step in which the pressure in the vessel is increased and at least one depressurisation step in which the pressure in the vessel is decreased, said method further comprising re-circulating in at least part time of the method at least a part of the fluid, the re-circulating comprising: withdrawing from the vessel at least a part of the fluid contained within the vessel and feeding it to a re-circulation loop and subsequently feeding the fluid to the vessel, wherein the fluid after the pressurisation step is in a supercritical state, and wherein re-circulation is performed during the pressurisation step and/or during the depressurisation step
    **characterized in that** the fluid present in the recirculation loop does not undergo a phase change to a liquid or solid state, and wherein part of the fluid in the pressure vessel is withdrawn to the re-circulation loop at a pressure in the pressure vessel below 70 bar, said method further comprising at least one step of extraction of components from the material contained in the vessel, wherein said extraction comprises controlling the thermodynamical state in the vessel so as to obtain a pre-selected state in which extraction of components occur.

2.  A method according to claim 1, further comprising a holding step in which the pressure in the vessel is substantially constant and/or in which the pressure of the fluid in the vessel is varied according to a pre-selected schedule during a holding period of predetermined length.

3.  A method according to claim 2, wherein the fluid is at supercritical conditions during the holding period.

4.  A method according to any of claims 1-3, further comprising the step of controlling the temperature of the fluid in the re-circulation loop.

5. A method according to any of the preceding claims, wherein heat is added to and/or extracted from the fluid in the re-circulation loop.

6. A method according to any of the preceding claims, wherein the method controls temperature-, pressure-and/or density profiles within the vessel.

7. A method according to any of the preceding claims, wherein said fluid further comprises at least one cosolvent.

8. A method according to any ot the preceding claims, wherein the fluid after the depressurisation step is in a gas and/or liquid and/or solid state.

9. A method according to any of the preceding claims, wherein the fluid volume withdrawn from the vessel corresponds to the exchange of at least one vessel volume per hour.

10. A method according to any of the preceding claims, wherein the pressure in the vessel after pressurisation step is in the range 85-500 bar.

11. A method according to any of the preceding claims, wherein the temperature in the vessel is maintained in the range 20-300 °C.

12. A method according to any of the preceding claims, wherein the rate of pressurisation and/or depressurisation is controlled in a predefined manner in specific pressure intervals during the (de)prcssurisation period.

13. A method according to claim 1, wherein the rate of pressure increase in at least part of the pressure range from 40 to 120 bars is at the most one half of the maximum rate of pressurisation outside this range.

14. A method according to any of the preceding claims, wherein the temperature of the fluid fed to the vessel during all or some of the holding period varies according to a predefined schedule in order to introduce pressure variations corresponding to the temperature variations in the vessel.

15. A method according to claim 14, wherein the uppermost and lowermost levels of the temperature are selected so as to provide a density change between the uppermost and lowermost level of up to 75 %.

16. A method according to any of the claims 2-15, wherein the re-circulation loop further comprises a mixer vessel for mixing the fluid with chemicals and being arranged downstream of a heat exchanger.

17. A method according to claim 1, wherein the temperature in the vessel during said extracting of components from the material contained in the vessel, is in the range 70-140 °C, and wherein the pressure in the vessel during said extraction of components from the material contained in the vessel, is in the range of 100-500 bar.

18. A method according to the claim 1 or 17, wherein the ratio of the amount of $CO_2$ used to extract said components from the material contained in the vessel to the amount of material contained in the vessel is in the range 1 kg/kg to 80 kg/kg.

19. A method according to any of the claims 1, 17 or 18, wherein the thermodynamic state in the vessel is controlled so as to obtain a selective extraction of components from the material contained in the vessel, while maintaining other extractable components in the material.

20. A method according to claim 19, wherein said method comprises subsequent extraction steps, wherein the thermodynamic state in each step is controlled so as to obtain a pre-selected state in which a pre-selected extraction of components from the material in the vessel occur.

21. A method according to claim 20, wherein the thermodynamic state in the first step is selected so as the total amount of extract being removed in the first step compared to the total amount of extractables is in the range 10-35 %, the total amount of extractables being determined by e.g. the SOXLETH method (ASTM D1416) using pentane as solvent.

**22.** A method according to claim 20 or 21, wherein the thermodynamic state in the first step is controlled so as the temperature in the vessel is in the range 65 100 °C and is controlled so as the pressure in the vessel is in the range 100-200 bar.

**23.** A method according to any of the claims 20-22, wherein the thermodynamic state in the second extraction step is controlled so as the temperature in the vessel is in the range 80-140 °C, and is controlled so as the pressure in vessel is in the range 200-300 bar.

**24.** A method according to any of claims 1, 17-23, said method further comprising at least one step of extraction of components from the material contained in the vessel, wherein said extraction comprising:

- controlling the thermodynamical state in the vessel so as to obtain a pre-selected state in which extraction of components occur,
- withdrawing from said vessel at least a part of the fluid contained within the vessel during said step(s) of extraction of components from the material contained in the vessel, and feeding it to a re-circulation loop for separation of extracted components from said fluid,
- separating at least partly said extracted components from said fluid at a pressure above the critical pressure of said fluid
- feeding said separated fluid to the vessel.

**25.** A method according to claim 24, wherein the pressure in the vessel for said extraction of components is at least 150 bars.

**26.** A method according to claim 25, wherein the pressure for said separation of said extracted components from said fluid is at least 1/2 of the of the pressure in the vessel for said extraction of components.

**27.** A method according to any of the claims 24-26, wherein the thermodynamic state for separation is controlled so as the solubility of the extracted components in said fluid is maximum 20 % of the solubility of the extracted components at the pressure in the vessel for said extraction of components.

**28.** A method according to any of the preceding claims, said method further comprising at least one impregnation or coating step for impregnating the material contained in the vessel, wherein said impregnation or coating step comprising controlling the thermodynamical state in the vessel so as to obtain a pre-selected state in which impregnation component(s) impregnate(s) or coat(s) the material contained in the vessel.

**29.** A method according to claim 28, wherein said impregnation or coating step involves a chemical reaction.

**30.** A method according to claim 29, wherein the chemical(s) used in said impregnation or coating step are precursors for a chemical reaction.

**31.** A method according to claim 18 or 29, wherein said chemical reaction is a silylation.

**32.** A method according to any of the claims 28-31, wherein said chemical(s) are impregnated or coated in substantially a monolayer on said material contained in the vessel.

**33.** A method according to any of the claims 28-32, wherein the surface coverage of said chemical(s) on said material contained in the vessel, is at least 5 molecules/nm$^2$.

**34.** A method according to claims 2-33, wherein the holding period comprises one or more extraction steps, and wherein the extraction step is followed by one or more impregnation steps.

**35.** A method according to claim 34, wherein the holding period comprises one or more extraction step(s) followed by one cr more impregnation step(s), and wherein the impregnation is followed by one or more step(s) of increasing the temperature, and wherein the one or more steps of increasing the temperature is followed by one or more steps of decreasing the temperature.

**36.** A method according to claim 35, wherein the last step(s) of the holding period comprises one or more extraction step(s), and wherein excess impregnation chemical(s) from the one or more impregnation step(s) are extracted from said material contained in the vessel in said at least one or more extraction step(s).

37. A method according tc any of the preceding claims, wherein the material and/or fluid present in the vessel is agitated and further comprising spraying of coating or impregnation chemical(s) into said agitated vessel in at least part time of said depressurisation step.

38. A method according to claim 37, wherein said coating or impregnation chemical(s) is/are sprayed into said agitated vessel and is/are substantially insoluble in the fluid contained in the vessel.

39. A method according to claims 1-38, wherein at least a first part of the fluid withdrawn from the vessel during depressurisation is fed to a buffer tank having an outlet connected to the vessel either directly or via the re-circulation loop, wherein it is condensed, and wherein at least a second part of fluid withdrawn from the vessel is fed to a condenser wherein it is condensed, the condensed fluid being subsequently fed into a buffer tank having an outlet connected to the vessel either directly or via the recirculation loop, the temperature in the buffer tank is controlled so as to maintain substantially constant, said controlling being obtained at least partially by splitting the first and the second part of fluid being withdrawn from the vessel and fed to the buffer tank, thereby balancing the heat consumed by the evaporative cooling generated from the fluid being withdrawn from the buffer tank through the cutlet thereof and wherein the controlling of the temperature in the buffer tank further comprising controlling the liquid level in the buffer tank by adding make-up fluid from a fluid make-up tank.

40. A method according to claim 39, comprising several treatment lines operating in parallel and in different states in the cyclic method, and wherein said several treatment lines are connected to said buffer tank and have:

 - common feeding system(s) for pressurisation,
 - common lines for depressurization including compressors,
 - common condenser(s),
 - common line(s) for spraying said fluid into the liquid phase
 - common make-up system(s).

41. An apparatus for use in treating a material, said apparatus comprising a vessel adapted to contain material to be treated and a fluid taking part in the treatment, said apparatus further comprising

 - pressure means for increasing / decreasing the pressure in the vessel so as to perform at least one pressurisation step in which the pressure in the vessel is increased and at least cne depressurisation step in which the pressure in the vessel is decreased
 - and a re-circulating loop for re-circulating at least a part of the fluid, the recirculation loop being adapted to withdrawing from the vessel at least a part of the fluid contained within the vessel and feeding it to the re-circulation loop and subsequently feeding the fluid to the vessel, wherein the fluid present in the re-circulation loop has substantially the same thermodynamical properties as the fluid within the vessel so that the fluid does not undergo a phase change tc a liquid or solid state,

said apparatus further comprising
a fluid recovery device in fluid communication with the vessel, and
wherein said fluid recovery device comprises:

 - means for withdrawing gaseous fluid from said fluid recovery device and feeding it to the vessel,
 - means for withdrawing liquid fluid from said fluid recovery device and feeding it to the vessel,
 - means for condensing fluid from the vessel by cooling
 - means for condensing fluid by direct spraying into the liquid phase of said fluid recovery device.
 - a heat exchanger immersed in said liquid phase of said fluid recovery device.

42. An apparatus according to claim 41, wherein said fluid recovery device is a condenser.

43. An apparatus according to claim 41 or 42, wherein said fluid recovery device is communicating with several vessels such as 2-6 vessels.

**Patentansprüche**

1. Verfahren zur Behandlung von Kork, der in einem Gefäß enthalten ist, wobei das Verfahren ein fluides Kohlendioxid einbezieht, das in dem Gefäß vorhanden ist, und mindestens einen Druckbeaufschlagungsschritt, bei dem der Druck in dem Gefäß erhöht wird, und mindestens einen Druckablassungsschritt, bei dem der Druck in dem Gefäß gesenkt wird, umfasst, wobei das Verfahren weiterhin Rückführen mindestens eines Teils des Fluids für mindestens einen Teil der Dauer des Verfahrens umfasst, wobei das Rückführen umfaßt: Abziehen mindestens eines Teils des Fluids, das in dem Gefäß enthalten ist, aus dem Gefäß und Einspeisen desselben in eine Rückführungsschleife und anschließendes Einspeisen des Fluids in das Gefäß, wobei sich das Fluid nach dem Druckbeaufschlagungsschritt in einem superkritischen Zustand befindet und wobei das Rückführen während des Druckbeaufschlagungsschritts und/oder während des Druckablassungsschritts durchgeführt wird, **dadurch gekennzeichnet, dass** das Fluid, das in der Rückführungsschleife vorhanden ist, keinen Phasenübergang in einen flüssigen oder festen Zustand durchmacht und wobei ein Teil des Fluids in dem Druckgefäß bei einem Druck in dem Druckgefäß von unter 70 bar in die Rückführungsschleife abgezogen wird, wobei das Verfahren weiterhin mindestens einen Schritt eines Extrahierens von Bestandteilen aus dem Material, das in dem Gefäß enthalten ist, umfaßt, wobei das Extrahieren Steuern des thermodynamischen Zustands in dem Gefäß umfaßt, um so einen vorgewählten Zustand, in dem Extrahieren von Bestandteilen stattfindet, zu erhalten.

2. Verfahren nach Anspruch 1, weiterhin umfassend einen Verweilschritt, in dem der Druck in dem Gefäß im Wesentlichen konstant ist und/oder in dem der Druck des Fluids in dem Gefäß während einer Verweildauer mit vorbestimmter Länge gemäß einem vorgewählten Plan verändert wird.

3. Verfahren nach Anspruch 2, wobei das Fluid während der Verweilzeit in superkritischen Zuständen ist.

4. Verfahren nach einem der Ansprüche 1-3, weiterhin umfassend den Schritt des Steuerns der Temperatur des Fluids in der Rückführungsschleife.

5. Verfahren nach einem der vorhergehenden Ansprüche, wobei dem Fluid in der Rückführungsschleife Wärme zugeführt und/oder entzogen wird.

6. Verfahren nach einem der vorhergehenden Ansprüche, wobei das Verfahren Temperatur-, Druck- und/oder Dichtprofile innerhalb des Gefäßes steuert.

7. Verfahren nach einen der vorhergehenden Ansprüche, wobei das Fluid weiterhin mindestens ein Mitlösungsmittel umfasst.

8. Verfahren nach einem der vorhergehenden Ansprüche, wobei das Fluid nach dem Druckablassungsschritt in einem gasförmigen und/oder flüssigen und/oder festen Zustand vorliegt.

9. Verfahren nach einem der vorhergehenden Ansprüche, wobei das Fluidvolumen, das aus dem Gefäß abgezogen wird, dem Austausch von mindestens einem Gefäßvolumen pro Stunde entspricht.

10. Verfahren nach einem der vorhergehenden Ansprüche, wobei der Druck in dem Gefäß nach dem Druckbeaufschlagungsschritt im Bereich 85-500 bar liegt.

11. Verfahren nach einem der vorhergehenden Ansprüche, wobei die Temperatur in dem Gefäß im Bereich 20-300°C gehalten wird.

12. Verfahren nach einem der vorhergehenden Ansprüche, wobei die Rate der Druckbeaufschlagung und/oder der Druckablassung auf eine vorherbestimmte Weise mit bestimmten Druckintervallen während des Zeitraums der Druckbeaufschlagung / Druckablassung gesteuert wird.

13. Verfahren nach Anspruch 1, wobei die Rate der Druckerhöhung in wenigstens einem Teil des Druckbereichs von 40 bis 120 bar höchstens die Hälfte der Höchstrate der Druckbeaufschlagung außerhalb dieses Bereichs beträgt.

14. Verfahren nach einem der vorhergehenden Ansprüche, wobei die Temperatur des Fluids, das während der gesamten Verweildauer oder eines Teils davon in das Gefäß eingespeist wird, gemäß einen vorherbestimmten Plan variiert, um Druckschwarkungen einzuführen, die den Temperaturschwankungen in dem Gefäß entsprechen.

**15.** Verfahren nach Anspruch 14, wobei das höchste und das niedrigste Temperaturniveau gewählt sind, um eine Dichteänderung zwischen dem höchsten und dem niedrigsten Niveau von bis zu 75% bereitzustellen.

**16.** Verfahren nach einem der Ansprüche 2-15, wobei die Rückführungsschleife weiterhin ein Mischgefäß zum Vermischen des Fluids mit Chemikalien, das einem Wärmetauscher nachgeordnet angeordnet ist, umfasst.

**17.** Verfahren nach Anspruch 1, wobei die Temperatur in dem Gefäß während des Extrahierens von Bestandteilen aus dem Material, das in dem Gefäß enthalten ist, im Bereich 70-140°C liegt und wobei der Druck in dem Gefäß während des Extrahierens von Bestandteilen aus dem Material, das in den Gefäß enthalten ist, im Bereich 100-500 bar liegt.

**18.** Verfahren nach Anspruch 1 oder 17, wobei das Verhältnis der Menge an $CO_2$, das verwendet wird, um die Bestandteile aus dem Material, das in dem Gefäß enthalten ist, zu extrahieren, zu der Menge an Material, das in dem Gefäß enthalten ist, im Bereich von 1 kg/kg bis 80 kg/kg liegt.

**19.** Verfahren nach einem der Ansprüche 1, 17 oder 18, wobei der thermodynamische Zustand in dem Gefäß gesteuert ist, um eine selektive Extraktion von Bestandteilen aus dem Material, das in dem Gefäß enthalten ist, zu erreichen, während andere extrahierbare Bestandteile in dem Material behalten bleiben.

**20.** Verfahren nach Anspruch 19, wobei das Verfahren nachfolgende Extrahierschritte umfasst, wobei der thermodynamische Zustand in jeden Schritt gesteuert ist, um einen vorgewählten Zustand zu erhalten, in dem eine vorgewählte Extraktion von Bestandteilen aus dem Material in dem Gefäß stattfindet.

**21.** Verfahren nach Anspruch 20, wobei der thermodynamische Zustand in dem ersten Schritt gewählt wird, sodass die Gesamtmenge an Extrakt, das in dem ersten Schritt entfernt wird, verglichen mit der Gesamtmenge an Extrahierbaren im Bereich 10-35% liegt, wobei die Gesamtmenge an Extrahierbarem beispielsweise mittels des SOXLETH-Verfahrens (ASTM D1416) unter Verwendung von Pentan als Lösungsmittel bestimmt wird.

**22.** Verfahren nach Anspruch 20 oder 21, wobei der thermodynamische Zustand in dem ersten Schritt gesteuert ist, sodass die Temperatur in dem Gefäß im Bereich 65-100°C liegt, und gesteuert ist, sodass der Druck in dem Gefäß im Bereich 100-200 bar liegt.

**23.** Verfahren nach einem der Ansprüche 20-22, wobei der thermodynamische Zustand in dem zweiten Extraktionsschritt gesteuert ist, sodass die Temperatur in dem Gefäß im Bereich 80-140°C liegt, und gesteuert ist, sodass der Druck in dem Gefäß im Bereich 200-300 bar liegt.

**24.** Verfahren nach einem der Ansprüche 1, 17-23, wobei das Verfahren weiterhin mindestens einen Schritt des Extrahierens von Bestandteilen aus dem Material, das in dem Gefäß enthalten ist, umfasst, wobei das Extrahieren umfasst:

- Steuern des thermodynamischen Zustands in dem Gefäß, um einen vorgewählten Zustand, in dem die Extraktion von Bestandteilen stattfindet, zu erhalten,
- Abziehen mindestens eines Teils des Fluids, das in dem Gefäß enthalten ist, aus dem Gefäß während des Schritts bzw. der Schritte des Extrahierens von Bestandteilen aus dem Material, das in dem Gefäß enthalten ist, und Einspeisen desselben in eine Rückführungsschleife zum Abtrennen von extrahierten Bestandteilen von dem Fluid,
- mindestens teilweises Abtrennen der extrahierten Bestandteile von dem Fluid bei einem Druck oberhalb des kritischen Drucks des Fluids,
- Einspeisen des abgetrennten Fluids in das Gefäß.

**25.** Verfahren nach Anspruch 24, wobei der Druck in dem Gefäß für das Extrahieren von Bestandteilen mindestens 150 bar beträgt.

**26.** Verfahren nach Anspruch 25, wobei der Druck für das Abtrennen der extrahierten Bestandteile von dem Fluid mindestens 1/2 des Drucks in dem Gefäß für das Extrahieren von Bestandteilen beträgt.

**27.** Verfahren nach einem der Ansprüche 24-26, wobei der thermodynamische Zustand zum Abtrennen gesteuert ist, sodass die Löslichkeit der extrahierten Bestandteile in dem Fluid maximal 20% der Löslichkeit der extrahierten Bestandteile bei dem Druck in dem Gefäß für das Extrahieren von Bestandteilen beträgt.

28. Verfahren nach einem der vorhergehenden Ansprüche, wobei das Verfahren weiterhin mindestens einen Imprägnier- oder Beschichtungsschritt zum Imprägnieren des Materials, das in dem Gefäß enthalten ist, umfasst, wobei der Imprägnier- oder Beschichtungsschritt Steuern des thermodynamischen Zustands in dem Gefäß umfasst, um so einen vorgewählten Zustand zu erhalten, in dem Imprägnierbestandteil(e) das Material, das in dem Gefäß enthalten ist, imprägniert/imprägnieren oder beschichtet/beschichten.

29. Verfahren nach Anspruch 28, wobei der Imprägnier- oder Beschichtungsschritt eine chemische Reaktion einbezieht.

30. Verfahren nach Anspruch 29, wobei die Chemikalie(n), die in dem Imprägnier- oder Beschichtungsschritt verwendet wird bzw. werden, Vorstufen für eine chemische Reaktion sind.

31. Verfahren nach Anspruch 28 oder 29, wobei die chemische Reaktion eine Silylierung ist.

32. Verfahren nach einem der Ansprüche 28-31, wobei die Chemikalie bzw. Chemikalien in im Wesentlichen einer Einzelschicht auf dem Material, das in dem Gefäß enthalten ist, imprägniert oder beschichtet wird bzw. werden.

33. Verfahren nach einem der Ansprüche 28-32, wobei die Oberflächenbedeckung der Chemikalie(n) auf dem Material, das in dem Gefäß enthalten ist, mindestens 5 Moleküle/nm$^2$ beträgt.

34. Verfahren nach Anspruch 2-33, wobei die Verweildauer einen oder mehrere Extrahierschritte umfasst und wobei dem Extrahierschritt ein oder mehrere Imprägnierschritte folgen.

35. Verfahren nach Anspruch 34, wobei die Verweildauer einen oder mehrere Extrahierschritte gefolgt von einem oder mehreren Imprägnierschritten umfasst und wobei dem Imprägnieren ein oder mehrere Schritte der Temperaturerhöhung folgen und wobei dem einen Schritt oder den mehreren Schritten der Temperaturerhöhung ein oder mehrere Schritte der Temperaturverminderung folgen.

36. Verfahren nach Anspruch 35, wobei der letzte Schritt bzw. die letzen Schritte der Verweildauer einen oder mehrere Extrahierschritte umfasst bzw. umfassen und wobei überschüssige Imprägnierchemikalie(n) von dem einen oder den mehreren Imprägnierschritt(en) aus dem Material, das in dem Gefäß enthalten ist, in dem wenigstens einen oder den mehreren Extrahierschritten extrahiert wird bzw. werden.

37. Verfahren nach einem der vorhergehenden Ansprüche, wobei das Material und/oder Fluid, das in dem Gefäß enthalten ist, bewegt wird bzw. werden und wobei das Verfahren weiterhin Sprühen von Beschichtungs- oder Imprägnierchemikalie(n) in das bewegte Gefäß während wenigstens eines Teils der Dauer des Druckablassungsschritts umfasst.

38. Verfahren nach Anspruch 37, wobei die Beschichtung- oder Imprägnierchemikalie (n) in das belegte Gefäß gesprüht wird bzw. werden und in dem Fluid, das in dem Gefäß enthalten ist, im Wesentlichen unlöslich ist bzw. sind.

39. Verfahren nach Anspruch 1-38, wobei mindestens ein erster Teil des Fluids, das während der Druckablassung aus dem Gefäß abgezogen wird, in einen Puffertank mit einem Ausgang, der entweder direkt oder über die Rückführungsschleife, wo es kondensiert wird, mit dem Gefäß verbunden ist, eingespeist wird und wobei mindestens ein zweiter Teil des Fluids, das aus dem Gefäß abgezogen wird, in einen Kondensator eingespeist wird, wo es kondensiert wird, wobei das kondensierte Fluid nachfolgend in einen Puffertank mit einem Ausgang, der entweder direkt oder über die Rückführungsschleife mit dem Gefäß verbunden ist, eingespeist wird, wobei die Temperatur in dem Puffertank gesteuert wird, sodass sie im Wesentlichen konstant gehalten wird, wobei das Steuern mindestens teilweise durch Auftrennen des ersten und des zweiten Teils des Fluids, das aus dem Gefäß abgezogen und in den Puffertank eingespeist wird, erreicht wird, wodurch die Wärme ausgeglichen wird, die durch die verdampfungskühlung verbraucht und von dem Fluid erzeugt wird, das aus dem Puffertank durch den Ausgang davon abgezogen wird, und wobei das Steuern der Temperatur in dem Puffertank weiterhin Steuern des Flüssigkeitspegels in dem Puffertank durch Zugabe von Zusatzfluid aus einem Zusatzfluidtank umfasst.

40. Verfahren nach Anspruch 39, umfassend verschiedene Behandlungslinien, die parallel und in verschiedenen Stadien des zyklischen Verfahrens arbeiten, und wobei die verschiedenen Behandlungslinien mit dem Puffertank verbunden sind und aufweisen:

- gemeinsames Einspeisesystem bzw. gemeinsame Einspeisesysteme zur Druckbeaufschlagung,

- gemeinsame Leitungen zur Druckablassung, einschließlich Kompressoren,
- gemeinsamer Kondensator bzw. gemeinsame Kondensatoren,
- gemeinsame Leitung bzw. Leitungen zum Sprühen des Fluids in die flüssige Phase,
- gemeinsames Zusatzsystem bzw. gemeinsame Zusatzsysteme.

41. Vorrichtung zur Verwendung bei der Behandlung eines Materials, wobei die Vorrichtung ein Gefäß umfasst, das dazu eingerichtet ist, zu behandelndes Material und ein Fluid, das an der Behandlung beteiligt ist, zu enthalten, wobei die Vorrichtung weiterhin umfasst

- Druckmittel zur Erhöhung/Verminderung des Drucks in dem Gefäß, um so mindestens einen Druckbeaufschlagungsschritt, bei dem der Druck in dem Gefäß erhöht wird, und mindestens einen Druckablassungsschritt, bei dem der Druck in dem Gefäß gesenkt wird, durchzuführen,
- und eine Rückführungsschleife zum Rückführen mindestens eines Teils des Fluids, wobei die Rückführungsschleife dazu eingerichtet ist, mindestens einen Teil des Fluids, das in dem Gefäß enthalten ist, aus dem Gefäß abzuziehen und es in die Rückführungsschleife einzuspeisen und das Fluid nachfolgend in das Gefäß einzuspeisen, wobei das Fluid, das in der Rückführungsschleife vorhanden ist, im Wesentlichen dieselben thermodynamischen Eigenschaften wie das Fluid in dem Gefäß hat, sodass das Fluid keinen Phasenübergang in einen flüssigen oder festen Zustand durchmacht,

wobei die Vorrichtung weiterhin umfaßt
eine Fluidrückgewinnungsvorrichtung in Fluidverbindung mit dem Gefäß und
wobei die Fluidrückgewinnungsvorrichtung umfaßt:

- Mittel zum Abziehen von gasförmigem Fluid aus der Fluidrückgewinnungsvorrichtung und Einspeisen desselben in das Gefäß,
- Mittel zum Abziehen von flüssigem Fluid aus der Fluidrückgewinnungsvorrichtung und Einspeisen desselben in das Gefäß,
- Mittel zum Kondensieren von Fluid aus dem Gefäß durch Kühlen,
- Mittel zum Kondensieren von Fluid durch direktes Sprühen in die flüssige Phase der Fluidrückgewinnungsvorrichtung,
- einen Wärmetauscher, der in der flüssigen Phase der Fluidrückgewinnungsvorrichtung eingetaucht ist.

42. Vorrichtung nach Anspruch 41, wobei die Fluidrückgewinnungsvorrichtung ein Kondensator ist.

43. Vorrichtung gemäß Anspruch 41 oder 42, wobei die Fluidrückgewinnungsvorrichtung mit mehreren Gefäßen, wie 2-6 Gefäßen, in Verbindung steht.

## Revendications

1. Méthode de traitement de liège contenu dans une cuve, ladite méthode faisant intervenir en tant que fluide du dioxyde de carbone présent dans la cuve et comprenant au moins une étape de pressurisation durant laquelle on augmente la pression à l'intérieur de la cuve et au moins une étape de dépressurisation durant laquelle on diminue la pression à l'intérieur de la cuve, ladite méthode comprenant en outre la recirculation pendant au moins une partie de la durée de la méthode d'au moins une partie du fluide, cette recirculation comprenant : le prélèvement dans la cuve d'au moins une partie du fluide qu'elle contient et l'introduction de celui-ci dans une boucle de recirculation, puis la réintroduction du fluide dans la cuve, dans laquelle le fluide se trouve à l'état supercritique après l'étape de pressurisation, et dans laquelle la recirculation est réalisée pendant l'étape de pressurisation et/ou pendant l'étape de dépressurisation,
**caractérisée en ce que** le fluide présent dans la boucle de recirculation ne subit pas de changement de phase vers un état liquide ou solide, une partie du fluide contenu dans la cuve sous pression étant prélevée vers la boucle de recirculation à une pression inférieure à 70 bars à l'intérieur de la cuve sous pression, et ladite méthode comprenant en outre au moins une étape d'extraction de composants de la matière contenue dans la cuve, laquelle extraction comprend un contrôle de l'état thermodynamique à l'intérieur de la cuve de manière à obtenir un état prédéfini dans lequel est effectuée l'extraction de composants.

2. Méthode selon la revendication 1, comprenant en outre une étape de maintien durant laquelle la pression à l'intérieur de la cuve est sensiblement constante et/ou durant laquelle on fait varier la pression du fluide dans la cuve selon un schéma prédéfini pendant une période de maintien de durée prédéterminée.

3.  Méthode selon la revendication 2, dans laquelle le fluide se trouve dans des conditions supercritiques pendant la période de maintien.

4.  Méthode selon l'une quelconque des revendications 1 à 3, comprenant en outre une étape de contrôle de la température du fluide dans la boucle de recirculation.

5.  Méthode selon l'une quelconque des revendications précédentes, dans laquelle on ajoute et/ou on extrait de la chaleur du fluide dans la boucle de recirculation.

6.  Méthode selon l'une quelconque des revendications précédentes, dans laquelle la méthode contrôle les profiles de température, de pression et/ou de densité à l'intérieur de la cuve.

7.  Méthode selon l'une quelconque des revendications précédentes, dans laquelle ledit fluide comprend en outre au moins un co-solvant.

8.  Méthode selon l'une quelconque des revendications précédentes, dans laquelle le fluide se trouve à l'état gazeux et/ou liquide et/ou solide après l'étape de dépressurisation.

9.  Méthode selon l'une quelconque des revendications précédentes, dans laquelle le volume de fluide prélevé dans la cuve équivaut au remplacement d'au moins une fois le volume de la cuve par heure.

10. Méthode selon l'une quelconque des revendications précédentes, dans laquelle la pression à l'intérieur de la cuve après l'étape de pressurisation se situe dans la plage allant de 85 à 500 bars.

11. Méthode selon l'une quelconque des revendications précédentes, dans laquelle la température à l'intérieur de la cuve est maintenue dans la plage allant de 20 à 300 °C.

12. Méthode selon l'une quelconque des revendications précédentes, dans laquelle la vitesse de pressurisation et/ou de dépressurisation est contrôlée de manière prédéfinie dans des intervalles de pression spécifiques pendant la période de (dé)pressurisation.

13. Méthode selon la revendication 1, dans laquelle la vitesse de montée en pression dans au moins une partie de la plage de pression allant de 40 à 120 bars n'excède pas la moitié de la vitesse maximum de pressurisation en dehors de cette plage.

14. Méthode selon l'une quelconque des revendications précédentes, dans laquelle la température du fluide introduit dans la cuve pendant la totalité ou une partie de la période de maintien varie selon un schéma prédéfini afin d'introduire des variations de pression correspondant aux variations de température à l'intérieur de la cuve.

15. Méthode selon la revendication 14, dans laquelle les niveaux supérieur et inférieur de température sont choisis de manière à obtenir une variation de densité allant jusqu'à 75 % entre le niveau supérieur et le niveau inférieur.

16. Méthode selon l'une quelconque des revendications 2 à 15, dans laquelle la boucle de recirculation comprend en outre une cuve mélangeuse pour mélanger le fluide avec des substances chimiques et se trouve en aval d'un échangeur de chaleur.

17. Méthode selon la revendication 1, dans laquelle la température à l'intérieur de la cuve pendant ladite extraction de composants de la matière contenue dans la cuve se situe dans la plage allant de 70 à 140 °C, et dans laquelle la pression à l'intérieur de la cuve pendant ladite extraction de composants de la matière contenue dans la cuve se situe dans la plage allant de 100 à 500 bars.

18. Méthode selon la revendication 1 ou 17, dans laquelle le rapport entre la quantité de $CO_2$ utilisée pour extraire lesdits composants de la matière contenue dans la cuve et la quantité de matière contenue dans la cuve se situe dans la plage allant de 1 kg/kg à 80 kg/kg.

19. Méthode selon l'une quelconque des revendications 1, 17 et 18, dans laquelle l'état thermodynamique à l'intérieur de la cuve est contrôlé de matière à effectuer une extraction sélective de composants de la matière contenue dans la cuve, tout en maintenant d'autres composants extractibles dans ladite matière.

**20.** Méthode selon la revendication 19, dans laquelle ladite méthode comprend des étapes d'extraction ultérieures, dans laquelle l'état thermodynamique de chaque étape est contrôlé de manière à obtenir un état prédéfini dans lequel une extraction prédéfinie de composants de la matière contenue dans la cuve est effectuée.

**21.** Méthode selon la revendications 20, dans laquelle l'état thermodynamique de la première étape est choisi de manière à ce que la quantité totale d'extrait retirée lors de la première étape représente 10 à 35 % de la quantité totale de composants extractibles, la quantité totale de composants extractibles étant déterminée selon, par exemple, la méthode SOXHLET (ASTM D1416), à l'aide de pentane utilisé comme soldant.

**22.** Méthode selon la revendication 20 ou 21, dans laquelle l'état thermodynamique de la première étape est contrôlé de manière à ce que la température à l'intérieur de la cuve se situe dans la plage allant de 65 à 100 °C, et contrôlé de manière à ce que la pression à l'intérieur de la cuve se situe dans la plage allant de 100 à 200 bars.

**23.** Méthode selon l'une quelconque des revendications 20 à 22, dans laquelle l'état thermodynamique de la deuxième étape d'extraction est contrôlé de manière à ce que la température à l'intérieur de la cuve se situe dans la plage allant de 80 à 140 °C, et contrôlé de manière à ce que la pression dans la cuve se situe dans la plage allant de 200 à 300 bars.

**24.** Méthode selon l'une quelconque des revendications 1 et 17 à 23, ladite méthode comprenant en outre au moins une étape d'extraction de composants de la matière contenue dans la cuve, dans laquelle ladite extraction comprend les étapes suivantes :

- contrôle de l'état thermodynamique à l'intérieur de la cuve de manière à obtenir un état prédéfini dans lequel l'extraction de composants est effectuée,
- prélèvement dans ladite cuve d'au moins une partie du fluide qu'elle contient pendant la ou lesdites étapes d'extraction de composants de la matière contenue dans la cuve, et introduction de ce fluide dans une boucle de recirculation afin de séparer dudit fluide les composants extraits,
- séparation dudit fluide, au moins en partie, desdits composants extraits à une pression supérieure à la pression critique dudit fluide,
- introduction dudit fluide séparé dans la cuve.

**25.** Méthode selon la revendication 24, dans laquelle la pression à l'intérieur de la cuve pour ladite extraction de composants vaut au moins 150 bars.

**26.** Méthode selon la revendication 25, dans laquelle la pression pour ladite séparation dudit fluide desdits composants extraits est au moins égale à la moitié de la pression à l'intérieur de la cuve pour ladite extraction de composants.

**27.** Méthode selon l'une quelconque des revendications 24 à 26, dans laquelle l'état thermodynamique pour la séparation est contrôlé de manière à ce que la solubilité dans ledit fluide des composants extraits n'excède pas 20 % de la solubilité des composants extraits à la pression de la cuve pour ladite extraction de composants.

**28.** Méthode selon l'une quelconque des revendications précédentes, ladite méthode comprenant en outre au moins une étape d'imprégnation ou d'enrobage pour imprégner la matière contenue dans la cuve, dans laquelle ladite étape d'imprégnation ou d'enrobage comprend un contrôle de l'état thermodynamique à l'intérieur de la cuve de manière à obtenir un état prédéfini dans lequel une ou des composant(s) d'imprégnation imprègne(nt) ou enrobe(nt) la matière contenue dans la cuve.

**29.** Méthode selon la revendication 28, dans laquelle ladite étape d'imprégnation ou d'enrobage fait intervenir une réaction chimique.

**30.** Méthode selon la revendication 29, dans laquelle la ou les substances chimiques utilisées dans ladite étape d'imprégnation ou d'enrobage sont des précurseurs pour une réaction chimique.

**31.** Méthode selon la revendication 28 ou 29, dans laquelle ladite réaction chimique est une silylation.

**32.** Méthode selon l'une quelconque des revendications 28 à 31, dans laquelle ladite ou lesdites substances chimiques imprègnent ou enrobent ladite matière contenue dans la cuve essentiellement sous forme de monocouche.

**33.** Méthode selon l'une quelconque des revendications 28 à 32, dans laquelle le recouvrement de la surface de ladite matière contenue dans la cuve par la ou les substances chimiques est au moins égal à 5 molécules par $nm^2$.

**34.** Méthode selon les revendications 2 à 33, dans laquelle la période de maintien comprend une ou plusieurs étapes d'extraction, et dans laquelle l'étape d'extraction est suivie d'une ou plusieurs étapes d'imprégnation.

**35.** Méthode selon la revendication 34, dans laquelle la période de maintien comprend une ou plusieurs étapes d'extraction, suivies d'une ou plusieurs étapes d'imprégnation, et dans laquelle l'imprégnation est suivie d'une ou plusieurs étapes d'augmentation de la température, et dans laquelle la ou les étapes d'augmentation de la température sont suivies d'une ou plusieurs étapes de réduction de la température.

**36.** Méthode selon la revendication 35, dans laquelle la ou les dernières étapes de la période de maintien comprennent une ou plusieurs étapes d'extraction, et dans laquelle la ou les substances chimiques d'imprégnation en excès d'une ou plusieurs étapes d'imprégnation sont extraites de ladite matière contenue dans la cuve lors de ladite ou desdites étapes d'extraction.

**37.** Méthode selon l'une quelconque des revendications précédentes, dans laquelle la matière et/ou le fluide présents dans la cuve sont agités et qui comprend en outre la pulvérisation de la ou des substances chimiques d'enrobage ou d'imprégnation dans ladite cuve agitée pendant au moins une partie de la durée de ladite étape de dépressurisation.

**38.** Méthode selon la revendication 37, dans laquelle ladite ou lesdites substances chimiques d'enrobage ou d'imprégnation sont pulvérisées dans ladite cuve agitée et sont essentiellement insolubles dans le fluide contenu dans la cuve.

**39.** Méthode selon les revendications 1 à 38, dans laquelle au moins une première partie du fluide prélevé dans la cuve pendant la dépressurisation est introduite dans un réservoir tampon possédant une sortie raccordée à la cuve soit directement soit par l'intermédiaire de la boucle de recirculation, où elle est condensée, et dans laquelle au moins une deuxième partie du fluide prélevé dans la cuve est introduite dans un condenseur où elle est condensée, le fluide condensé étant ensuite introduit dans un réservoir tampon possédant une sortie raccordée à la cuve soit directement soit par l'intermédiaire de la boucle de recirculation, dans laquelle la température à l'intérieur du réservoir tampon est contrôlée de manière à demeurer sensiblement constante, ledit contrôle étant obtenu au moins en partie en partageant la première et la deuxième partie du fluide prélevé dans la cuve et introduit dans le réservoir tampon, ce qui a pour effet de compenser la chaleur consommée par le refroidissement par évaporation généré par le fluide prélevé dans le réservoir tampon par la sortie de celui-ci, et dans laquelle le contrôle de la température à l'intérieur du réservoir tampon comprend en outre un contrôle du niveau du liquide dans le réservoir tampon par ajout d'un fluide d'appoint provenant d'un réservoir d'appoint en fluide.

**40.** Méthode selon la revendication 39, comprenant plusieurs conduites de traitement fonctionnant en parallèle et dans différents états dans la méthode cyclique, et dans laquelle lesdites conduites de traitement sont raccordées audit réservoir tampon et possèdent :

- un ou des systèmes d'alimentation communs pour la pressurisation,
- des conduites communes pour la dépressurisation incluant des compresseurs,
- un ou des condenseurs communs,
- une ou des conduites communes pour la pulvérisation dudit fluide dans la phase liquide,
- un ou des systèmes d'appoint communs.

**41.** Appareil destiné à être utilisé pour traiter une matière, ledit appareil comprenant une cuve appropriée pour contenir la matière à traiter et un fluide intervenant dans le traitement, ledit appareil comprenant en outre

- un dispositif de pression pour augmenter ou diminuer la pression à l'intérieur de la cuve de manière à réaliser au moins une étape de pressurisation durant laquelle on augmente la pression à l'intérieur de la cuve et au moins une étape de dépressurisation durant laquelle on diminue la pression à l'intérieur de la cuve,
- et une boucle de recirculation pour faire recirculer au moins une partie du fluide, la boucle de recirculation étant appropriée pour prélever dans la cuve au moins une partie du fluide qu'elle contient et l'introduire dans la boucle de recirculation, puis introduire le fluide dans la cuve, où le fluide présent dans la boucle de recirculation possède sensiblement les mêmes propriétés thermodynamiques que le fluide contenu dans la cuve de manière à ce que le fluide ne subisse pas de changement de phase vers un état liquide ou solide,

ledit appareil comprenant en outre

- un dispositif de récupération de fluide en communication de fluide avec la cuve, lequel dispositif de récupération de fluide comprend :

  - un moyen pour prélever du fluide gazeux dans ledit dispositif de récupération de fluide et l'introduire dans la cuve,
  - un moyen pour prélever du fluide liquide dans ledit dispositif de récupération de fluide et l'introduire dans la cuve,
  - un moyen pour condenser du fluide provenant de la cuve par refroidissement,
  - un moyen pour condenser du fluide par pulvérisation directe dans la phase liquide dudit dispositif de récupération de fluide,
  - un échangeur de chaleur immergé dans ladite phase liquide dudit dispositif de récupération de fluide.

**42.** Appareil selon la revendication 41, dans lequel ledit dispositif de récupération de fluide est un condenseur.

**43.** Appareil selon la revendication 41 ou 42, dans lequel ledit dispositif de récupération de fluide communique avec plusieurs cuves, par exemple 2 à 6 cuves.

**Reactor pressure**

Fig. 1

Time

0: Material handling and purging, 1: Pressurization, 2: Holding Period for Treatment, 3: Depressurization.

EP 1 701 775 B2

Fig. 2

Fig. 3

Efficiency (%)

Efficiency (%)

Fig. 4

Fig. 5

Fig. 6

**EP 1 701 775 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0828020 A2
- WO 9627704 A
- EP 0083890 A
- EP 1265683 A
- US 5514220 A
- EP 1265583 A